(19) **Europäisches Patentamt / European Patent Office / Office européen des brevets**

(11) **EP 4 617 291 A1**

(12) **EUROPEAN PATENT APPLICATION**
published in accordance with Art. 153(4) EPC

(43) Date of publication:
**17.09.2025 Bulletin 2025/38**

(21) Application number: **23888741.8**

(22) Date of filing: **08.11.2023**

(51) International Patent Classification (IPC):
*C08C 19/02* (2006.01)

(52) Cooperative Patent Classification (CPC):
**C08C 19/02**

(86) International application number:
**PCT/JP2023/040226**

(87) International publication number:
**WO 2024/101394 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.11.2022 JP 2022178955**

(71) Applicant: **Asahi Kasei Kabushiki Kaisha**
**Tokyo 1000006 (JP)**

(72) Inventors:
- **SUGIMOTO, Tadahiro**
  **Tokyo 100-0006 (JP)**
- **HAYATA, Daisuke**
  **Tokyo 100-0006 (JP)**
- **MATSUOKA, Daigo**
  **Tokyo 100-0006 (JP)**
- **YASUMOTO, Atsushi**
  **Tokyo 100-0006 (JP)**
- **KONOMOTO, Tsuneaki**
  **Tokyo 100-0006 (JP)**

(74) Representative: **Strehl & Partner mbB**
**Maximilianstrasse 54**
**80538 München (DE)**

(54) **HYDROGENATED CONJUGATED DIENE POLYMER, AND HYDROGENATED CONJUGATED DIENE POLYMER MANUFACTURING METHOD**

(57)    A hydrogenated conjugated diene-based polymer satisfying the following conditions (i) to (iii):
<Condition (i)>
a random polymer containing a conjugated diene monomer unit and optionally containing an aromatic vinyl monomer unit, wherein
a content of an aromatic vinyl monomer block is less than 10 mass% of the hydrogenated conjugated diene-based polymer;

<Condition (ii)>
a weight average molecular weight is $10 \times 10^4$ or more and $200 \times 10^4$ or less; and
<Condition (iii)>
a molecular weight distribution of an ozonolysis product is 2.1 or more and 6.0 or less.

## Description

Technical Field

The present invention relates to a hydrogenated conjugated diene-based polymer and a method for producing a hydrogenated conjugated diene-based polymer.

Background Art

Conventionally, rubber products including tires have been demanded to be enhanced in durability such as ozone resistance and breaking strength and to have low hysteresis loss properties. For example, Patent Document 1 and Patent Document 2 each propose a technique relating to a rubber composition including a hydrogenated conjugated diene-based polymer compounded, in which ozone resistance is improved.

Citation List

Patent Document

Patent Document 1: WO 2017/014282

Patent Document 2: Japanese Patent Publication No. 6845679

Summary of Invention

Technical Problem

However, in a case where a hydrogenation step of a conjugated diene-based polymer is performed with a batch system as described in Patent Documents 1 and 2, a problem is that, when the hydrogenation rate is increased for an improvement in ozone resistance, the viscosity of the resulting hydrogenated conjugated diene-based polymer is significantly increased due to entanglement between such polymers and such hydrogenated conjugated diene-based polymer and rubber composition are significantly deteriorated in processability.
In a case where the molecular weight of the conjugated diene-based polymer is decreased in order to improve such processability, not only cold-flow resistance is deteriorated, but also breaking properties are decreased.
In a case where the hydrogenation rate is decreased, such processability is enhanced, but ozone resistance, breaking properties, and cold-flow resistance are deteriorated.
While a small amount of an aromatic vinyl monomer block can also be introduced into the conjugated diene-based polymer to allow the hydrogenated conjugated diene-based polymer and the rubber composition to be enhanced in cold-flow resistance (fluidity) and breaking properties, such a case has the problem of deterioration of low hysteresis loss properties.
That is, the above-mentioned hydrogenated conjugated diene-based polymer and rubber composition conventionally proposed have the problem of having a difficulty in not only maintaining favorable processability and cold-flow resistance, but also achieving excellent ozone resistance, breaking properties, and low hysteresis loss properties.
In view of the above problems of the prior art, an object of the present invention is to provide a hydrogenated conjugated diene-based polymer which not only maintains favorable processability and cold-flow resistance, but also can allow the resulting rubber composition to achieve excellent processability, ozone resistance, breaking properties, and low hysteresis loss properties.

Solution to Problem

The present inventors have made intensive studies in order to solve the above problems, and as a result, have found that the above problems can be solved by a hydrogenated conjugated diene-based polymer having a specified amount of an aromatic vinyl block, a weight average molecular weight, and a molecular weight distribution of an ozonolysis product, leading to completion of the present invention.
That is, the present invention is as follows.
[1] A hydrogenated conjugated diene-based polymer satisfying the following conditions (i) to (iii):

<Condition (i)>

a random polymer containing a conjugated diene monomer unit and optionally containing an aromatic vinyl monomer unit, wherein
a content of an aromatic vinyl monomer block is less than 10 mass% of the hydrogenated conjugated diene-based polymer;

<Condition (ii)>
a weight average molecular weight is $10 \times 10^4$ or more and $200 \times 10^4$ or less; and

<Condition (iii)>
a molecular weight distribution of an ozonolysis product is 2.1 or more and 6.0 or less.

[2] The hydrogenated conjugated diene-based polymer according to [1], wherein a hydrogenation rate is 97 mol% or less.

[3] The hydrogenated conjugated diene-based polymer according to [1] or [2], wherein a hydrogenation rate is 50 mol% or more.

[4] The hydrogenated conjugated diene-based polymer according to any one of [1] to [3], wherein the polymer has 1 mass% or more of an ethylene structure.

[5] The hydrogenated conjugated diene-based polymer according to any one of [1] to [4], wherein the polymer contains an aromatic vinyl monomer unit.

[6] A method for producing the hydrogenated conjugated diene-based polymer according to any one of [1] to [5], containing:

a polymerization step of obtaining a conjugated diene-based polymer having a weight average molecular weight of $10 \times 10^4$ or more and $200 \times 10^4$ or less and containing an aromatic vinyl monomer block at a content of less than 10 mass%,

a hydrogenation step of obtaining a plurality of hydrogenated conjugated diene-based polymers different in hydrogenation rate, and

a mixing step of mixing the plurality of hydrogenated conjugated diene-based polymers to achieve a distribution of the hydrogenation rate HWD represented by the following expression (1) of 1.005 or more:

$$ HWD = \sum_{i=1}^{n} H_i^2 w_i \bigg/ \sum_{i=1}^{n} H_i w_i \qquad \cdots \quad (1) $$

wherein n represents a total number of components in the hydrogenated conjugated diene-based polymers having different percentages of hydrogenation, and $w_i$ represents a mass fraction of a hydrogenated conjugated diene-based polymer having a specified percentage $H_i$ of hydrogenation in all the hydrogenated conjugated diene-based polymers.

[7] A method for producing the hydrogenated conjugated diene-based polymer according to any one of [1] to [5], containing:

a polymerization step of obtaining a conjugated diene-based polymer having a weight average molecular weight of $10 \times 10^4$ or more and $200 \times 10^4$ or less and containing an aromatic vinyl monomer block at a content of less than 10 mass%, and

a hydrogenation step of hydrogenating the conjugated diene-based polymer, wherein

the hydrogenation step is a continuous process, and the number N of complete mixing tanks in series in fitting of a residence time distribution in a reactor in a complete-mixing-tanks-in-series model by an impulse response method, is from 1.0 to 2.5.

[8] The method for producing the hydrogenated conjugated diene-based polymer according to [7], containing supplying hydrogen and the conjugated diene-based polymer in opposite directions to each other, to the reactor in the hydrogenation step, or supplying each of hydrogen and/or the conjugated diene-based polymer through a plurality of locations.

[9] The method for producing the hydrogenated conjugated diene-based polymer according to [7] or [8], containing

using a stirring tank type reactor in the continuous process, and supplying the conjugated diene-based polymer and a hydrogenation catalyst through a tank upper portion of the stirring tank type reactor and supplying hydrogen through a tank bottom portion of the stirring tank type reactor with stirring, and extruding the hydrogenated conjugated diene-based polymer through the tank bottom portion of the stirring tank type reactor.

Advantageous Effect of Invention

According to the present invention, there can be provided a hydrogenated conjugated diene-based polymer which is favorable in processability and cold-flow resistance and which allows the resulting rubber composition to achieve excellent processability, ozone resistance, breaking properties, and low hysteresis loss properties.

Description of Embodiments

Hereinafter, an embodiment (hereinafter, referred to as "the present embodiment".) for carrying out the present invention is described in detail.
The following present embodiment is illustrative for describing the present invention, and the present invention is not limited to the following embodiment. The present invention can be appropriately modified and carried out within the gist thereof.

[Hydrogenated conjugated diene-based polymer]

A hydrogenated conjugated diene-based polymer of the present embodiment satisfies the following conditions (i) to (iii).

<Condition (i)>

A random polymer containing a conjugated diene monomer unit and optionally containing an aromatic vinyl monomer unit, wherein a content of an aromatic vinyl monomer block is less than 10 mass% of the hydrogenated conjugated diene-based polymer;

<Condition (ii)>

A weight average molecular weight is $10 \times 10^4$ or more and $200 \times 10^4$ or less;

<Condition (iii)>

A molecular weight distribution of an ozonolysis product is 2.1 or more and 6.0 or less.
According to the above configuration, processability and cold-flow resistance are favorable, and a rubber composition obtained by appropriately combining the hydrogenated conjugated diene-based polymer of the present embodiment, with any other polymer, a filling agent component, a plasticizer component, a crosslinking agent component, and/or the like, as described below, is excellent in processability, ozone resistance, breaking properties, and low hysteresis loss properties.

The hydrogenated conjugated diene-based polymer of the present embodiment has a conjugated diene compound-based constituent unit (hereinafter, also referred to as "conjugated diene monomer unit".) and a structure obtained by hydrogenation of a portion obtained by polymerization of conjugated diene as a monomer or an ethylene-based constituent unit (hereinafter, also referred to as "ethylene structure".). The hydrogenated conjugated diene-based polymer of the present embodiment preferably contains an aromatic vinyl compound-based constituent unit (aromatic vinyl monomer unit).

The ethylene structure is formed by performing a hydrogenation reaction of the conjugated diene monomer unit to thereby partially form a double bond moiety into an ethylene structure, or copolymerizing a conjugated diene compound and ethylene.

The hydrogenated conjugated diene-based polymer of the present embodiment is preferably obtained by subjecting the conjugated diene-based polymer to the hydrogenation reaction from the viewpoint of production cost. The hydrogenation rate can be controlled so as to be high, to result in an increased in content of the ethylene structure.

In the hydrogenated conjugated diene-based polymer of the present embodiment, the ethylene structure means any structure obtained by hydrogenation of one which forms a polymer chain with both ends of a main chain of the conjugated diene monomer unit (for example, 1,4-bond of a polymer of 1,3-butadiene as a monomer), and the ethylene structure does not encompass any structure obtained by hydrogenation of any other form (for example, 1,2-vinyl bond of a polymer of 1,3-butadiene as a monomer).

Examples of the conjugated diene compound used for forming the conjugated diene monomer unit include, but not limited to the following, 1,3-butadiene, isoprene, 1,3-pentadiene, 2,3-dimethylbutadiene, 2-phenyl-1,3-butadiene, and 1,3-hexadiene. These may be used singly or in combinations of two or more kinds thereof. In particular, 1,3-butadiene and isoprene are preferable and 1,3-butadiene is more preferable from the viewpoint of practical use, for example, availability of a monomer.

(Condition (i): content of aromatic vinyl monomer unit)

The hydrogenated conjugated diene-based polymer of the present embodiment optionally contains an aromatic vinyl monomer unit, and the content of the aromatic vinyl monomer unit in the hydrogenated conjugated diene-based polymer is preferably 2 mass% or more, more preferably 3 mass% or more, further preferably 5 mass% or more based on the total amount of the hydrogenated conjugated diene-based polymer, from the viewpoint of breaking strength of the rubber composition.

The content of the aromatic vinyl monomer unit is preferably 50 mass% or less, more preferably 45 mass% or less, further preferably 40 mass% or less based on the total amount of the hydrogenated conjugated diene-based polymer of the present embodiment, from the viewpoint of low hysteresis loss properties of the rubber composition.

The content of the aromatic vinyl monomer unit can be measured according to a method described in Examples below, and the content of the aromatic vinyl monomer unit can be controlled in the above numerical value range by adjusting the timing of addition, the amount of addition, and the polymerization time of an aromatic vinyl compound in a polymerization step of forming the conjugated diene-based polymer.

Examples of the aromatic vinyl compound for forming the aromatic vinyl monomer unit include, but not limited to the following, styrene, $\alpha$-methylstyrene, 1-vinylnaphthalene, 3-vinyltoluene, ethylvinylbenzene, divinylbenzene, 4-cyclohexylstyrene, and 2,4,6-trimethylstyrene. These may be used singly or in combinations of two or more kinds thereof. In particular, styrene is particularly preferable from the viewpoint of practical use, for example, availability of a monomer.

In the hydrogenated conjugated diene-based polymer of the present embodiment, the content of the aromatic vinyl monomer block (percentage of a long chain in the aromatic vinyl compound-based constituent unit) is less than 10 mass%, preferably 7 mass% or less, more preferably 5 mass% or less based on the total mass of the hydrogenated conjugated diene-based polymer of the present embodiment from the viewpoint of low hysteresis loss properties of the rubber composition. An advantage is that low hysteresis loss properties of the rubber composition not only contribute to fuel-saving economy of tire in the case of use as rubber for tires, but also less cause the change in stress during repeated deformation even in an application of an industry product such as cushion rubber.

The content of the aromatic vinyl monomer block in the hydrogenated conjugated diene-based polymer of the present embodiment can be controlled in the numerical value range by, for example, adjusting the amount of addition and the timing of addition of the aromatic vinyl compound, the amount of addition of a randomizer, and the like in the polymerization step.

The hydrogenated conjugated diene-based polymer of the present embodiment is a random polymer from the viewpoint of a reduction in hysteresis loss of the rubber composition. The "random polymer" herein refers to one in which the percentage of a long chain in the aromatic vinyl monomer unit is less than 10 mass% based on the total mass in hydrogenated conjugated diene-based polymer. The percentage of the long chain here means the percentage of a chain (long chain) having eight or more of continuous certain structural units, in all such certain structural units. In a case where the "random polymer" is a polymer in which two or more monomer units are used, the two or more monomer units may be distributed in the polymer uniformly, or in a tapered, stepwise, protruded, or depressed manner.

The percentage of the long chain in the aromatic vinyl monomer unit can be calculated as the percentage of the value of integral of the following chemical shift S range (a) based on the total value of integral of the following chemical shift S ranges from (a) to (c) in a $^1$H-NMR spectrum of the hydrogenated conjugated diene-based polymer of the present embodiment, as measured with deuterochloroform as a solvent. For example, in a case where the aromatic vinyl monomer is styrene, the percentage of such styrene can be calculated by determining the percentage of the value of integral of the range (a) based on the total value of integral of the respective ranges from (a) to (c) and multiplying the percentage by 2.5. Thus, the percentage of the long chain in the aromatic vinyl monomer unit can be understood.

(a) long chain of 8 or more in aromatic vinyl monomer unit: $6.00 \leq S < 6.68$
(b) long chain of from 2 to 7 in aromatic vinyl monomer unit: $6.68 \leq S < 6.89$
(c) single chain in aromatic vinyl monomer unit: $6.89 \leq S \leq 8.00$

As described above, the hydrogenated conjugated diene-based polymer of the present embodiment is a random polymer from the viewpoint of low hysteresis loss properties of the rubber composition.

The hydrogenated conjugated diene-based polymer of the present embodiment may be modified or unmodified, and is preferably a modified random polymer from the viewpoints of reinforcing properties and wear resistance by a filling agent component of the rubber composition.

The modification method is described below, and examples of the hydrogenated conjugated diene-based polymer modified include a polymer having a polymerization end terminal into which a functional group is introduced by a modifying agent.

(Amount of ethylene structure and hydrogenation rate)

In a case where the hydrogenated conjugated diene-based polymer of the present embodiment is obtained by performing a hydrogenation reaction of the conjugated diene-based polymer, an ethylene structure in which a 1,4-bond is hydrogenated is contained in an amount of preferably 1 mass% or more, more preferably 2 mass% or more, further preferably 5 mass% or more from the viewpoints of ozone resistance and tensile strength of the rubber composition containing the hydrogenated conjugated diene-based polymer of the present embodiment. The upper limit of the amount of the ethylene structure is preferably 95 mass% or less, more preferably 90 mass% or less from the viewpoint of processability, while depends on the content of the aromatic vinyl monomer unit before hydrogenation, and the amount of 1,2-vinyl bond.

The amount of the ethylene structure in the hydrogenated conjugated diene-based polymer of the present embodiment can be controlled by, for example, adjusting the ratio between styrene and 1,3-butadiene, the ratio between a 1,4-bond and a 1,2-vinyl bond in a butadiene portion, and furthermore the hydrogenation rate in the case of a polymer with styrene and 1,3-butadiene as monomers.

Examples of the method for increasing the amount of the ethylene structure include a method involving decreasing the ratio of styrene and increasing the ratio of butadiene, a method involving increasing the ratio of 1,4-bond in a butadiene portion, and a method involving increasing the hydrogenation rate.

On the contrary, the amount of the ethylene structure can be decreased by increasing the ratio of styrene and decreasing the ratio of butadiene, decreasing the ratio of a 1,4-bond in a butadiene portion, or decreasing the hydrogenation rate.

For example, in the case of a polymer with 1,3-butadiene as a monomer, a 1,4-bond and a 1,2-vinyl bond are generated by polymerization, and in a case where a polymer containing both the bonds is hydrogenated, the hydrogenation reaction tends to rapidly progress to lead to preferential hydrogenation in a 1,2-vinyl bond. Therefore, in order to "have 1 mass% or more of the ethylene structure", it is preferable to form more than 1 mass% of a 1,4-bond by polymerization and then consume most of a 1,2-vinyl bond and also hydrogenate a 1,4-bond so that 1 mass% or more of such a bond is hydrogenated, thereby forming 1 mass% or more of the ethylene structure.

Specifically, the numerical value of the hydrogenation rate is preferably higher than the numerical value of the ratio of a 1,2-vinyl bond in the ratio of the conjugated diene monomer unit, by 1% or more, more preferably 2% or more, and, when the hydrogenation rate has a distribution as described below, 1 mass% or more of a 1,4-bond may also be hydrogenated even in the case of a smaller numerical value of the hydrogenation rate than the numerical value of the amount of a 1,2-vinyl bond. The hydrogenation rate (hydrogenation rate of the conjugated diene portion) is preferably a hydrogenation rate which allows a 1,4-bond to be hydrogenated so that 1 mass% or more of the ethylene structure is contained, and the hydrogenation rate is preferably 50 mol% or more, more preferably 60 mol% or more, further preferably 70 mol% or more, while depends on the amount of 1,2-vinyl bond before hydrogenation. The hydrogenation rate of the hydrogenated conjugated diene-based polymer of the present embodiment is preferably 97 mol% or less, more preferably 93 mol% or less, further preferably 90 mol% or less, still more preferably 88 mol% or less, most preferably 85 mol% or less from the viewpoint of allowing the effect of the distribution of the hydrogenation rate, described below, to be sufficiently exerted.

The hydrogenation rate can be calculated from the spectrum decrease rate with respect to an unsaturated bond moiety, in a spectrum obtained by $^1$H-NMR measurement, and corresponds to the average hydrogenation rate when the percentage of conversion of hydrogen has a distribution as described below.

(Weight average molecular weight)

The weight average molecular weight (Mw) of the hydrogenated conjugated diene-based polymer of the present embodiment is $10 \times 10^4$ or more, preferably $15 \times 10^4$ or more more preferably $20 \times 10^4$ or more from the viewpoint of tensile strength of the rubber composition. The weight average molecular weight of the hydrogenated conjugated diene-based polymer is $200 \times 10^4$ or less, preferably $100 \times 10^4$ or less, more preferably $70 \times 10^4$ or less from the viewpoint of processability of the hydrogenated conjugated diene-based polymer and the rubber composition of the present embodiment.

(Molecular weight distribution)

The molecular weight distribution (Mw/Mn) of the hydrogenated conjugated diene-based polymer of the present embodiment is preferably 1.1 or more, more preferably 1.2 or more, further preferably 1.3 or more from the viewpoint of processability of the hydrogenated conjugated diene-based polymer and the rubber composition. The molecular weight distribution of the hydrogenated conjugated diene-based polymer is preferably 4.0 or less, more preferably 3.5 or less, further preferably 3.0 or less from the viewpoint of low hysteresis loss properties of the rubber composition.

The weight average molecular weight (Mw) and the number average molecular weight (Mn) can be measured by a method described in Examples below.

(Molecular weight distribution of ozonolysis product (Distribution of hydrogenation rate))

The hydrogenation rate of the hydrogenated conjugated diene-based polymer of the present embodiment preferably has a distribution from the viewpoint that processability, cold-flow resistance, and ozone resistance and tensile strength of the rubber composition are well balanced.

In a case where the distribution of the hydrogenation rate of the hydrogenated conjugated diene-based polymer is narrow, namely, in a case where the hydrogenation rate is monomodal or the frequency distribution of the hydrogenation rate exhibits a sharp peak, the method for enhancing ozone resistance and tensile strength of the rubber composition is considered to be, for example, a method for increasing the hydrogenation rate, as in WO 2014/133097, but an increased hydrogenation rate causes an excess increase in Mooney viscosity of the resulting hydrogenated conjugated diene-based polymer, to result to a tendency to deteriorate processability. While a reduction in molecular weight is considered in order to maintain favorable processability, a reduction in molecular weight leads to deterioration in tensile strength of the resulting rubber composition, thereby resulting in a tendency to make it difficult to satisfy both of these physical properties.

On the other hand, in a case where the distribution of the hydrogenation rate of the hydrogenated conjugated diene-based polymer has an expansion, namely, in a case where the frequency distribution of the hydrogenation rate exhibits a broad peak, a component low in hydrogenation rate, which is excellent in processability and crosslinking properties, and a component high in hydrogenation rate, which is excellent in ozone resistance and tensile characteristics of the resulting rubber composition, co-exist, and therefore these physical properties can be well balanced.

Furthermore, such a hydrogenated conjugated diene-based polymer exhibiting an expanded distribution of the hydrogenation rate, when compared with a hydrogenated conjugated diene-based polymer exhibiting a narrow distribution of the hydrogenation rate, has the characteristics of allowing the resulting rubber composition to be more excellent in ozone resistance in the case of comparison at the same average hydrogenation rate. The reason for this is considered because a component having many ethylene structure-derived units in its molecular chain, like a component high in hydrogenation rate, is lower in surface free energy than a component low in hydrogenation rate and therefore tends to be segregated on a rubber composition surface in the case of the rubber composition resulting from the hydrogenated conjugated diene-based polymer and serves as a protective film for the resulting vulcanized product, thereby having an effect of preventing penetration of ozone into the vulcanized product and preventing degradation of the vulcanized product.

The distribution of the hydrogenation rate of the hydrogenated conjugated diene-based polymer can be indirectly evaluated by the following method. That is, the distribution of the hydrogenation rate of the hydrogenated conjugated diene-based polymer can be evaluated by a method involving decomposing a double bond in the hydrogenated conjugated diene-based polymer, with ozone, according to ozonolysis known as the method of Tanaka et al. (Polymer, 22, 1721 (1981)), and analyzing the molecular weight distribution of the resulting decomposed product by GPC (gel permeation chromatography).

Specifically, in a case where a random copolymer of butadiene and styrene is targeted as the hydrogenated conjugated diene-based polymer of the present embodiment and all double bonds in the conjugated diene-based polymer are hydrogenated, there is no double bond to be cut by ozonolysis and therefore a decomposed product is only a polymer not to be cut. On the other hand, in a case where the conjugated diene-based polymer is not hydrogenated, all moieties formed due to polymerization by 1,4-bonds in butadiene are cut and therefore a combination of a decomposed product containing one or a plurality of styrene moieties, a decomposed product containing one or a plurality of styrene moieties and 1,2-bonds, and a decomposed product containing only one or a plurality of 1,2-bonds is generated depending on the lengths of adjacent 1,4-bonds. **In** this case, while the molecular weight distribution of such decomposed products has an expansion in some degree depending on the frequency of 1,4-bond and the random degree of styrene, a decomposed product low in molecular weight is much present as a whole and therefore the expansion is about 1.8 and is not increased to 2.1 or more. In a case where the distribution of the hydrogenation rate of the hydrogenated conjugated diene-based polymer is broad, both a decomposed product similar to the above polymer not to be cut and a decomposed product finely cut are included to cause an expansion also in the distribution of the molecular length of an ozonolysis product, and therefore the molecular weight distribution of the ozonolysis product is expanded.

In a case where the distribution of the hydrogenation rate of the hydrogenated conjugated diene-based polymer of the present embodiment is evaluated with the molecular weight distribution of the ozonolysis product, the molecular weight distribution of the ozonolysis product is 2.1 or more, preferably 2.2 or more, more preferably 2.3 or more, further preferably 2.45 or more, still more preferably 2.50 or more from the viewpoint that processability and cold-flow resistance of the hydrogenated conjugated diene-based polymer and the rubber composition of the present embodiment, and ozone resistance and tensile strength of the rubber composition are well balanced.

A molecular weight distribution of the ozonolysis product, of 2.1 or more, means that the distribution of the hydrogenation rate of the hydrogenated conjugated diene-based polymer of the present embodiment is broad in some degree, and can allow processability and cold-flow resistance of the hydrogenated conjugated diene-based polymer and the rubber composition of the present embodiment, and ozone resistance and tensile strength of the rubber composition to be in a balanced manner.

The molecular weight distribution of the ozonolysis product is 6.0 or less, preferably 5.7 or less, more preferably 5.5 or less, further preferably 5.0 or less, still more preferably 4.7 or less from the viewpoint of allowing ozone resistance and tensile strength of the rubber composition to be sufficiently exerted.

The molecular weight distribution of the ozonolysis product can be set to 6.0 or less, thereby hardly causing a component very low in hydrogenation rate to be included and allowing ozone resistance and tensile strength of the rubber composition to be sufficiently exhibited.

The molecular weight distribution of the hydrogenated conjugated diene-based polymer has almost no effect on the molecular weight distribution of the ozonolysis product. The reason for this is because not only the hydrogenated conjugated diene-based polymer of the present embodiment contains less than 10 mass% of the aromatic vinyl monomer block and an aromatic vinyl monomer block not to be decomposed by ozonolysis is not present or is less present, but also the length of a molecular chain after ozonolysis is not affected by the length of a molecular chain before ozonolysis.

The molecular weight distribution of the ozonolysis product can be controlled in the above numerical value range by, for example, adjusting the distributions of a 1,2-bond and a 1,4-bond, and the distribution of the hydrogenation rate in the hydrogenated conjugated diene-based polymer of the present embodiment. Specific examples include a method involving imparting the distributions of a 1,2-bond and a 1,4-bond, and a method involving imparting the distribution of the hydrogenation rate in the hydrogenated conjugated diene-based polymer of the present embodiment, as described below.

In the hydrogenated conjugated diene-based polymer of the present embodiment, the area ratio S up to the molecular weight at a peak top assigned to the ozonolysis product, indicated by the following expression (I), as measured by GPC (gel permeation chromatography) after decomposition by the above ozonolysis method, is preferably 50% or less, more preferably 45% or less, further preferably 40% or less from the viewpoint that processability and cold-flow resistance of the hydrogenated conjugated diene-based polymer and the rubber composition of the present embodiment, and ozone resistance and tensile strength of the rubber composition are well balanced.

Area ratio S up to molecular weight at peak top assigned to ozonolysis

$$\text{product} = A/B \times 100 \ldots (I)$$

A: Area of peak from molecular weight of 200 of ozonolysis product to molecular weight at peak top assigned thereto, by GPC

B: Area of entire peak corresponding to molecular weight of 200 or more of ozonolysis product, by GPC

[Method for producing hydrogenated conjugated diene-based polymer]

The hydrogenated conjugated diene-based polymer of the present embodiment can be produced by, for example, a method including a polymerization step of polymerizing a conjugated diene compound and an aromatic vinyl compound, and a hydrogenation step of subjecting the conjugated diene-based polymer obtained in the polymerization step to a hydrogenation reaction; or a method including a polymerization step of copolymerizing a conjugated diene compound, ethylene, and an aromatic vinyl compound.

In order to form the ethylene structure, the hydrogenation step may be performed or ethylene may be copolymerized in the polymerization step. Even in a case where ethylene may be copolymerized in the polymerization step, the hydrogenation step may also be performed.

A modification step described below may also be, if necessary, performed.

In the polymerization step, a conjugated diene-based polymer is obtained which has a weight average molecular weight of $10 \times 10^4$ or more and $200 \times 10^4$ or less and contains an aromatic vinyl monomer block at a content of less than 10 mass%.

(Polymerization step)

The polymerization step can be carried out by a solution polymerization method. The monomer concentration in the solution is preferably 5 mass% or more, more preferably 10 mass% or more. The monomer concentration in the solution is 5 mass% or more, to result in tendencies to increase the amount of a conjugated diene-based polymer obtained and decrease the cost. The monomer concentration in the solution is preferably 50 mass% or less, more preferably 30 mass% or less. The monomer concentration in the solution is 50 mass% or less to result in tendencies to more decrease the solution viscosity, enhance the stirring efficiency, and easily perform polymerization.

In a case where anionic polymerization is performed in the polymerization step, the polymerization initiator is not particularly limited, and an organolithium compound is preferably used.

The organolithium compound is not particularly limited, and examples thereof include ethyllithium, n-propyllithium, isopropyllithium, n-butyllithium, sec-butyllithium, tert-butyllithium, tert-octyllithium, n-decyllithium, phenyllithium, 2-naphthyllithium, 2-butyl-phenyllithium, 4-phenyl-butyllithium, cyclohexyllithium, cyclopentyllithium, and a reaction product of diisopropenylbenzene and butyllithium. In particular, one having an alkyl group having from 2 to 20 carbon atoms is preferable, and n-butyllithium or sec-butyllithium is preferable from the viewpoints of, for example, availability and safety.

In a case where coordination polymerization is performed in the polymerization step, the polymerization initiator to be used is preferably a polymerization catalyst composition described in Japanese Patent Laid-Open No. 2020-45500.

The method for using the polymerization initiator for anionic polymerization or coordination polymerization to thereby produce a conjugated diene-based polymer is not particularly limited, and a conventionally known method can be used. Specifically, an objective conjugated diene-based polymer can be obtained by polymerizing styrene, 1,3-butadiene, ethylene, or the like with butyllithium as the polymerization initiator in an organic solvent inert to the reaction, for example, in a hydrocarbon-based solvent such as an aliphatic, alicyclic, or aromatic hydrocarbon compound, if necessary, in the presence of a predetermined randomizer.

The hydrocarbon-based solvent is preferably a hydrocarbon-based solvent having from 3 to 8 carbon atoms. Examples include, but not limited to the following, propane, n-butane, isobutane, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, and ethylbenzene.

These may be used singly or as a mixture of two or more kinds thereof.

The randomizer means a compound having a function of control of a microstructure of a conjugated diene portion in the conjugated diene-based polymer, for example, an increase in 1,2-vinyl bond in butadiene or a 3,4-bond in isoprene, or control of the compositional distribution of a monomer unit in the conjugated diene-based polymer, for example, randomization of a styrene unit and a butadiene unit in a styrene/butadiene copolymer.

The randomizer is not particularly limited, and any one among known compounds conventionally commonly used as a randomizer can be used.

Examples of the randomizer include, but not limited to the following, ether compounds and tertiary amine compounds, such as dimethoxybenzene, tetrahydrofuran, dimethoxyethane, diethylene glycol dibutyl ether, diethylene glycol dimethyl ether, 2,2-di(2-tetrahydrofuryl)propane, triethylamine, pyridine, N-methylmorpholine, N,N,N',N'-tetramethylethylenediamine, and 1,2-dipiperidinoethane. Any of potassium salt compounds such as potassium-t-amylate and potassium-t-butoxide, and sodium salt compounds such as sodium-t-amylate can also be used.

These randomizers may be used singly or in combinations of two or more kinds thereof.

The amount of the randomizer used is preferably 0.01 molar equivalents or more, more preferably 0.05 molar equivalents or more, based on 1 mol of the polymerization initiator. The amount of the randomizer used is 0.01 molar equivalents or more based on 1 mol of the polymerization initiator to result in a tendency to provide more randomization. The amount of the randomizer used is preferably 1000 molar equivalents or less, more preferably 500 molar equivalents or less. The amount of the randomizer used is 1000 molar equivalents or less based on 1 mol of the polymerization initiator to result in tendencies to impart a low reaction speed of the monomer and to inhibit randomization from hardly occurring.

The reaction temperature in the polymerization step is not particularly limited as long as the reaction suitably progresses, and is usually preferably from 10°C to 130°C, more preferably from 25°C to 110°C.

(Modification step)

The method for producing the hydrogenated conjugated diene-based polymer of the present embodiment may include a modification step of modifying the resulting conjugated diene-based polymer, after the above polymerization step.

In a case where the modification step is performed, it is preferable to add the conjugated diene compound at the end of the polymerization step to thereby allow the polymerization terminal to be a conjugated diene monomer unit. Thus, a reaction by a modifying agent tends to more suitably progress.

The modification step is, for example, a step of reacting an active terminal of the conjugated diene-based polymer obtained in the polymerization step with a compound having a functional group which interacts with silica and/or carbon black.

The modification step can introduce a functional group which interacts with silica and/or carbon black, into a polymerization end terminal of the conjugated diene-based polymer, to thereby obtain a conjugated diene-based polymer with a modified polymerization end terminal. The terminal means any portion other than a structure derived from a monomer having a carbon-carbon double bond, which is present at a terminal of a molecular chain.

In the modification step, an active terminal of the conjugated diene-based polymer obtained in the polymerization step is reacted with a compound having a functional group which interacts with silica and/or carbon black. A polymerization initiator having a functional group which interacts with silica and/or carbon black, in its molecule, can be used to perform polymerization, thereby introducing the functional group into an initiation terminal of the conjugated diene-based polymer. The functional group can also be, if necessary, introduced into each of both initiation and end terminals.

The conjugated diene-based polymer used in the modification reaction (hereinafter, also referred to as "terminal modification reaction".) may be one whose polymerization initiation terminal is not modified or is modified, as long as such one has an active terminal. The compound having a functional group is not particularly limited as long as it is a compound having a functional group which interacts with silica and/or carbon black and capable of reacting with a polymerization active terminal of the conjugated diene-based polymer, and a specific modification reaction using such conjugated diene-based polymer and compound having a functional group is preferably a method involving introduction of such a functional group into the conjugated diene-based polymer by use of a tin atom- or nitrogen atom-containing terminal modifying agent, more preferably a method involving introduction of such a functional group into the conjugated diene-based polymer by use of a nitrogen atom-containing terminal modifying agent.

Preferable examples of the nitrogen atom-containing terminal modifying agent include an isocyanate compound, an isothiocyanate compound, an isocyacuric acid derivative, a nitrogen group-containing carbonyl compound, a nitrogen group-containing vinyl compound, a nitrogen group-containing epoxy compound, a nitrogen group-containing alkoxysilane compound, and a cyclic urea compound from the viewpoints of polymerization productivity and a high percentage of modification. In particular, a nitrogen group-containing alkoxysilane compound and a cyclic urea compound are more preferable from the viewpoints of polymerization productivity and a high percentage of modification, and reinforcing properties by a filler.

These modifying agents may be used singly or in combinations of two or more kinds thereof.

Examples of nitrogen group-containing alkoxysilane compound include, but not limited to the following, 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2,2-dimethoxy-1-(4-trimethoxysilylbutyl)-1-aza-2-silacyclohexane, 2,2-dimethoxy-1-(5-trimethoxysilylpentyl)-1-aza-2-silacycloheptane, 2,2-dimethoxy-1-(3-dimethoxymethylsilylpropyl)-1-aza-2-silacyclopentane, 2,2-diethoxy-1-(3-diethoxyethylsilylpropyl)-1-aza-2-silacyclopentane, 2-methoxy-2-methyl-1-(3-trimethoxysilylpropyl)-1-aza-2-silacyclopentane, 2-ethoxy-2-ethyl-1-(3-triethoxysilylpropyl)-1-aza-2-silacyclopentane, 2-methoxy-2-methyl-1-(3-dimethoxymethylsilylpropyl)-1-aza-2-silacyclopentane, 2-ethoxy-2-ethyl-1-(3-diethoxyethylsilylpropyl)-1-aza-2-silacyclopentane, tris(3-trimethoxysilylpropyl)amine, tris(3-methyldimethoxysilylpropyl)amine, tris(3-triethoxysilylpropyl)amine, tris(3-methyldiethoxysilylpropyl)amine, tris(trimethoxysilylmethyl)amine, tris(2-trimethoxysilylethyl)amine, tris(4-trimethoxysilylbutyl)amine, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, and N1-(3-(bis(3-(trimethoxysilyl)propyl)amino)propyl)-N1-methyl-N3-(3-(methyl(3-(trimethoxysilyl)propyl)amino)propyl)-N3-(3-(trimethoxysilyl)propyl)-1,3-propanediamine.

Examples of the cyclic urea compound include, but not limited to the following, 1,3-diethyl-2-imidazolinone, 1,3-dimethyl-2-imidazolinone, 1,3-dipropyl-2-imidazolinone, 1-methyl-3-ethyl-2-imidazolinone, 1-methyl-3-propyl-2-imidazolinone, 1-methyl-3-butyl-2-imidazolinone, 1,3-dihydro-1,3-dimethyl-2H-imidazol-2-one, 1,3-diethyl-2-imidazolidinone, 1,3-dimethyl-2-imidazolidinone, 1,3-dipropyl-2-imidazolidinone, 1-methyl-3-ethyl-2-imidazolidinone, 1-methyl-3-propyl-2-imidazolidinone, and 1-methyl-3-butyl-2-imidazolidinone.

The terminal modification reaction of a conjugated diene-based polymer can be performed as, for example, a solution reaction. The solution reaction may be performed by use of a solution including an unreacted monomer after the completion of the polymerization reaction in the polymerization step, or may be performed by isolating a conjugated diene-based polymer included in the solution and dissolving it in a proper solvent such as cyclohexane. The terminal modification reaction may be performed with any of a batch system and a continuous system, or a combination thereof. The method for adding the terminal modifying agent is not particularly limited, and may be any of a method for adding it at one time, a method for adding it in portions, a method for continuously adding it, and the like.

The amount of the terminal modifying agent used in the terminal modification reaction may be appropriately set depending on the type of the terminal modifying agent used in the reaction, and is preferably 0.1 molar equivalents or more, more preferably 0.3 molar equivalents or more relative to a metal atom involved in the polymerization reaction, included in the polymerization initiator. An amount of 0.1 molar equivalents or more enables the modification reaction to sufficiently progress and enables suitable interaction with a filling agent component such as silica and/or carbon black to be provided, to allow dispersibility of the filling agent component to be suitably improved.

The temperature of the terminal modification reaction is usually the same as the temperature of the polymerization reaction, and is preferably from -20 to 150°C, more preferably from 0 to 120°C, particularly preferably from 20 to 100°C. A higher temperature of the modification reaction tends to result in a decrease in viscosity of a conjugated diene-based polymer after the modification. On the other hand, a lower temperature of the modification reaction tends to allow a polymerization active terminal to be hardly deactivated. The reaction time of the modification reaction is preferably from 5 seconds to 1 hour, more preferably from 10 seconds to 45 minutes, further preferably from 15 seconds to 30 minutes.

(Stopping of reaction of polymerization step)

The polymerization step in the above method for producing the hydrogenated conjugated diene-based polymer can be stopped by addition of a reaction stopping agent commonly used in the art. Examples of such a reaction stopping agent include polar solvents having active proton, for example, alcohols such as methanol, ethanol and isopropanol, and acetic acid, and any mixed liquid thereof, or any mixed liquid of such a polar solvent and a non-polar solvent such as hexane or cyclohexane.

The amount of the reaction stopping agent added is usually sufficiently any molar amount equal to or about twice that of an anionic polymerization initiator.

(Hydrogenation step)

In a case where the hydrogenated conjugated diene-based polymer of the present embodiment is produced by hydrogenation to the conjugated diene-based polymer, the hydrogenation method and reaction conditions are not particularly limited, and can be performed by a known method in known conditions.

The hydrogenation reaction can be usually performed in the presence of a hydrogenation catalyst at from 20 to 150°C and a hydrogen pressure of from 0.1 to 10 MPa. The hydrogenation rate of the hydrogenated conjugated diene-based polymer of the present embodiment can be controlled by adjusting the amount and the type of the hydrogenation catalyst, the hydrogen pressure and the reaction time in the hydrogenation reaction, and the like.

A reaction process of hydrogenation can be made with any of a batch system and a continuous system, or a combination thereof, and it is necessary to impart any distribution of the hydrogenation rate in order that the molecular weight distribution of the ozonolysis product of the hydrogenated conjugated diene-based polymer of the present embodiment is from 2.1 to 6.0.

Examples of the method for imparting any distribution to the distribution of the hydrogenation rate include a method involving obtaining a plurality of hydrogenated conjugated diene-based polymers different in hydrogenation rate and mixing such a plurality of hydrogenation conjugated diene-based polymers, and a method involving controlling a residence time distribution in a reactor in which the hydrogenation step is performed with a continuous process as the hydrogenation step.

In the case of obtaining a plurality of hydrogenated conjugated diene-based polymers different in hydrogenation rate and mixing them, the distribution of the hydrogenation rate HWD of the resulting hydrogenated conjugated diene-based polymer can be represented by the following expression (1).

$$HWD = \sum_{i=1}^{n} H_i^2 w_i \Big/ \sum_{i=1}^{n} H_i w_i \quad \cdot \cdot \cdot \quad (1)$$

In the expression (1), n represents the total number of components in the hydrogenated conjugated diene-based polymers having different percentages of hydrogenation, and $w_i$ represents the mass fraction of a hydrogenated conjugated diene-based polymer having a specified percentage $H_i$ of hydrogenation in all the hydrogenated conjugated diene-based polymers.

The distribution of the hydrogenation rate HWD of the resulting hydrogenated conjugated diene-based polymer and the molecular weight distribution of the ozonolysis product depend on the microstructure and the reference hydrogenation rate, and the mixing ratio of such a plurality of hydrogenated conjugated diene-based polymers, and, for example, in a case where a conjugated diene-based polymer in which the content of styrene is 8 mass% and the amount of a 1,2-vinyl bond is 40% is hydrogenated and hydrogenated conjugated diene-based polymers respectively having percentages of hydrogenation, each changed by a hydrogenation rate of 20% with respect to the reference hydrogenation rate at each of the higher hydrogenation and the lower hydrogenation, are mixed so as to be the same in amount, the distribution of the hydrogenation rate HWD is from 1.02 to 1.1 and the molecular weight distribution of the ozonolysis product is about 2.2 to 4.5. In a case where the same conjugated diene-based polymer as described above is hydrogenated and hydrogenated conjugated diene-based polymers respectively having percentages of hydrogenation, each changed by a hydrogenation rate of 10% with respect to the reference hydrogenation rate at each of the higher hydrogenation and the lower hydrogenation, are mixed so as to be the same in amount, the distribution of the hydrogenation rate HWD is from 1.005 to 1.02 and the molecular weight distribution of the ozonolysis product is about 2.1 to 3.5. The method for broadening the distribution of the hydrogenation rate can be adopted to control the molecular weight distribution of the ozonolysis product of the hydrogenated conjugated diene-based polymer to from 2.1 to 6.0. The distribution of the hydrogenation rate HWD is controlled to 1.005 or more and the molecular weight distribution of the ozonolysis product of the hydrogenated conjugated diene-based polymer is controlled in the numerical value range of 2.1 to 6.0, to result in a tendency to obtain a hydrogenated conjugated diene-based polymer whose cold-flow resistance, ozone resistance and tensile strength are well balanced.

In a case where the hydrogenation step is carried out by a continuous process, the distribution width of the hydrogenation rate of a hydrogenated conjugated diene-based polymer to be produced can be controlled by adjusting the solution viscosity, the amount of a solution in a reactor, and stirring conditions, and changing the number of ports of the conjugated diene-based polymer supplied to a continuous hydrogenation reactor and changing a flow path for passing depending on the conjugated diene-based polymer, to adjust the reaction time distribution (residence time distribution).

An index of the reaction time distribution (residence time distribution) is the value of N which represents the degree of mixing by a complete-mixing-tanks-in-series model in which N of complete mixing tanks equal in volume to each other are assumed to be linked in series. The value of N is preferably smaller and closer to that of complete mixing, and specifically can be closer to that of complete mixing by a decrease in value of N by decreasing the solution viscosity, increasing the rotational speed of stirring, reducing the value of H/D which is the ratio of the height (H) of liquid surface to the diameter (D) of the reactor, and the like.

More specifically, in a case where the hydrogenation step is carried out by a continuous process, setting the number N of complete mixing tanks in series in fitting of the residence time distribution in the reactor in a complete-mixing-tanks-in-series model by an impulse response method to from 1.0 to 2.5 allows to broaden the distribution width of the hydrogenation rate of a hydrogenated conjugated diene-based polymer to be produced, and to control the molecular weight distribution of the ozonolysis product of the hydrogenated conjugated diene-based polymer in the numerical value range of 2.1 to 6.0, and accordingly a hydrogenated conjugated diene-based polymer whose cold-flow resistance, ozone resistance and tensile strength are well balanced is obtained.

In addition to the above method, examples of the procedure involving adjusting the reaction time distribution and thus broadening the distribution width of the hydrogenation rate include methods of (1) and (2).

Method of (1): method involving supplying hydrogen and the conjugated diene-based polymer in opposite directions to each other, to a reactor for performing the hydrogenation step.

Method of (2): method involving supplying each of hydrogen and/or the conjugated diene-based polymer through a plurality of locations.

In the case of the method of (1), examples of a more preferable method for broadening the reaction time distribution so that the distribution of the hydrogenation rate is broadened include a method involving supplying a conjugated diene-based polymer solution and the hydrogenation catalyst through a tank upper portion of the stirring tank type reactor, and continuously supplying hydrogen through a tank bottom portion of the stirring tank type reactor with stirring, and performing extrusion through the tank bottom portion of the stirring tank type reactor by the continuous supplying.

In the case of the method of (2), examples of such a preferable method include a method involving, with a plurality of ports of the conjugated diene-based polymer supplied to a reactor for a continuous reaction process of hydrogenation for broadening the reaction time distribution provided, continuously supplying 80% of the entire amount of the polymer through an upper portion of the reactor and continuously supplying 20% of the entire amount thereof through a middle portion of the reactor, and continuously taking out the entire amount of the polymer after the hydrogenation reaction, through a lower portion of the reactor.

In the case of the methods of (1) and (2), the value of N in the above complete-mixing-tanks-in-series model, while depends on the L/D of a reactor for performing the hydrogenation reaction (L: height of reactor, D: diameter of reactor), the shape and the rotational speed of a stirring blade, and the solution viscosity, is about 1.0 to 1.8, and the molecular weight distribution of the resulting ozonolysis product of the hydrogenated conjugated diene-based polymer, while depends on the microstructure, the reference hydrogenation rate, and the like, is about 2.3 to 6.0.

In addition, in the continuous process of the hydrogenation step, a method can be adopted involving using a stirring tank type reactor, and continuously supplying a conjugated diene-based polymer solution, and the hydrogenation catalyst and hydrogen in a homogeneous system, to a tank bottom portion of the stirring tank type reactor, with stirring, to thereby fill the interior of the stirring tank type reactor, and also extruding the hydrogenated conjugated diene-based polymer through a tank upper portion of the stirring tank type reactor by the continuous supplying of the polymer solution, hydrogenation catalyst, and hydrogen.

Examples of a specific method in stirring conditions for broadening the reaction time distribution of the hydrogenation reaction include a method by a back-mix reactor of a system in which a stirring tank type reactor is used for vigorous mixing by use of a stirring machine, preferably include a method used in a complete mixing-type reactor. According to such a method, the number of N in which a continuous reaction process of hydrogenation is represented by complete mixing tanks in series can be decreased and the reaction time distribution can be increased to obtain a hydrogenated conjugated diene-based polymer broad in distribution of the hydrogenation rate.

A known method such as an impulse response method or a step response method described in, for example, the chemical engineering handbook can be used as the fitting for calculation of the number N of complete mixing tanks in series.

The hydrogenation catalyst here used can be a compound having any of metals in Groups 4 to 11 of the periodic table of the elements. For example, a compound containing any of Ti, V, Co, Ni, Zr, Ru, Rh, Pd, Hf, Re, and Pt atoms can be used as the hydrogenation catalyst. More specific examples of the hydrogenation catalyst can include a metallocene compound of Ti, Zr, Hf, Co, Ni, Pd, Pt, Ru, Rh, Re, or the like; a supported-type heterogeneous catalyst in which a metal such as Pd, Ni, Pt, Rh, or Ru is supported on a carrier such as carbon, silica, alumina, or diatomaceous earth; a homogeneous Ziegler catalyst in which an organic salt or an acetylacetone salt of a metal element such as Ni or Co and a reducing agent such as organoaluminum are combined; an organometallic compound or complex of Ru, Rh, or the like; and fullerene and carbon nanotube each occluding hydrogen.

In particular, a metallocene compound containing any of Ti, Zr, Hf, Co, and Ni is preferable in that the hydrogenation reaction can be made in a homogeneous system in an inert organic solvent. A metallocene compound containing any of Ti, Zr, and Hf is further preferable.

These hydrogenation catalysts may be used singly or in combinations of two or more kinds thereof.

A preferable method for obtaining the hydrogenated conjugated diene-based polymer involves performing solution polymerization, performing a modification treatment directly using a polymer solution obtained, and then, if necessary, subjecting the resultant to the hydrogenation step. Since the solution viscosity is commonly increased by the hydrogenation reaction, a step of decreasing the solution viscosity in advance by dilution with a solvent, before the hydrogenation step, may be added depending on a process to be applied.

(Desolvating step)

The hydrogenated conjugated diene-based polymer is obtained by removing a solvent from the polymer solution obtained above, and isolating the polymer.

Examples of the method for isolating the hydrogenated conjugated diene-based polymer include a known solvent removal method such as steam stripping, and a method to be performed by a drying operation such as a heat treatment using a dehydration extruder, a dry extruder, or a conveyor.

[Rubber composition]

The hydrogenated conjugated diene-based polymer of the present embodiment can be combined with any other polymer, a filling agent component, a plasticizer component, a crosslinking agent component, and the like, and thus formed into a rubber composition having desired characteristics.

Examples of such other polymer include, but not limited to the following, natural rubber (NR), isoprene rubber (IR), styrene/butadiene rubber (SBR), and butadiene rubber (BR). These may be used singly or in combinations of two or more kinds thereof.

The filling agent component is compounded in the rubber composition for the purpose of reinforcing rubber, and examples thereof include, but not limited to the following, white filling agents (inorganic filling agents) such as silica, calcium carbonate, mica, aluminum hydroxide, magnesium oxide, magnesium hydroxide, clay, talc, alumina, titanium oxide, and mica, and carbon black. These may be used singly or in combinations of two or more kinds thereof. In particular, silica and carbon black are preferable.

The content of the filling agent is preferably 30 parts by mass or more, more preferably 50 parts by mass or more based on 100 parts by mass of a rubber component including the hydrogenated conjugated diene-based polymer of the present embodiment and any other polymer from the viewpoint of tensile strength of the rubber composition. In a case where silica is used as the filling agent, the content of the silica is preferably 120 parts by mass or less, more preferably 100 parts by mass or less from the viewpoints of processability and low hysteresis loss properties.

The silica is not particularly limited, examples thereof include silica by a dry method (anhydrous silica) and silica by a wet method (water-containing silica), and silica by a wet method is preferable because of having many silanol groups.

The nitrogen adsorption specific surface area ($N_2SA$) of the silica is preferably 60 $m^2/g$ or more, more preferably 120 $m^2/g$ or more from the viewpoint of wear resistance of the rubber composition, and is preferably 300 $m^2/g$ or less, more preferably 200 $m^2/g$ or less from the viewpoint of low fuel economy of the rubber composition. The nitrogen adsorption specific surface area of the silica is a value obtained by measurement with a BET method according to ASTM D3037-81.

Examples of the carbon black include, but not limited to the following, furnace black (furnace carbon black) such as SAF, ISAF, HAF, MAF, FEF, SRF, GPF, APF, FF, CF, SCF, and ECF; acetylene black (acetylene carbon black); thermal black (thermal carbon black) such as FT and MT; channel black (channel carbon black) such as EPC, MPC, and CC; and graphite. These may be used singly or in combinations of two or more kinds thereof.

The nitrogen adsorption specific surface area ($N_2SA$) of the carbon black is usually from 5 to 200 $m^2/g$, is preferably 30 $m^2/g$ or more, more preferably 50 $m^2/g$ or more from the viewpoint of wear resistance of the rubber composition, and is preferably 150 $m^2/g$ or less, more preferably 120 $m^2/g$ or less from the viewpoint of low fuel economy of the rubber composition. The nitrogen adsorption specific surface area of the carbon black is measured according to ASTM D4820-93.

The amount of absorption of dibutyl phthalate (DBP) by the carbon black is usually from 5 to 300 mL/100 g, and preferably the lower limit thereof is 80 mL/100 g or more and the upper limit thereof is 180 mL/100 g or less. The amount of absorption of DBP by the carbon black is measured according to ASTM D2414-93.

The silica is preferably used in combination with a silane coupling agent.

The silane coupling agent here used can be any conventionally known one. Examples include, but not limited to the following, bis(3-triethoxysilylpropyl)tetrasulfide, bis(2-triethoxysilylethyl)tetrasulfide, bis(3-trimethoxysilylpropyl)tetrasulfide, bis(2-trimethoxysilylethyl)tetrasulfide, bis(3-triethoxysilylpropyl)trisulfide, bis(3-trimethoxysilylpropyl)trisulfide, bis(3-triethoxysilylpropyl)disulfide, bis(3-trimethoxysilylpropyl)disulfide, 3-trimethoxysilylpropyl-N,N-dimethylthiocarbamoyl tetrasulfide, 3-trimethoxysilylpropylbenzothiazolyl tetrasulfide, 3-triethoxysilylpropylbenzothiazole tetrasulfide, 3-triethoxysilylpropyl methacrylate monosulfide, and 3-trimethoxysilylpropyl methacrylate monosulfide; mercapto-based compounds such as 3-mercaptopropyltrimethoxysilane, 3-mercaptopropyltriethoxysilane, 2-mercaptoethyltrimethoxysilane, and 2-mercaptoethyltriethoxysilane; vinyl silane coupling agents such as vinyltriethoxysilane and vinyltrimethoxysilane; amino-based silane coupling agents such as 3-aminopropyltriethoxysilane, 3-aminopropyltrimethoxysilane, 3-(2-aminoethyl)aminopropyltriethoxysilane, and 3-(2-aminoethyl)aminopropyltrimethoxysilane; glycidoxy-based silane coupling agents such as $\gamma$-glycidoxypropyltriethoxysilane, $\gamma$-glycidoxypropyltrimethoxysilane, $\gamma$-glycidoxypropylmethyldiethoxysilane, and $\gamma$-glycidoxypropylmethyldimethoxysilane; nitro-based silane coupling agents such as 3-nitropropyltrimethoxysilane and 3-nitropropyltriethoxysilane; and chloro-based silane coupling agents such as 3-chloropropyltrimethoxysilane, 3-chloropropyltriethoxysilane, 2-chloroethyltrimethoxysilane, and 2-chloroethyltriethoxysilane.

These silane coupling agents may be used singly or in combinations of two or more kinds thereof. In particular, a sulfide-based silane coupling agent is preferable, and bis(3-triethoxysilylpropyl)tetrasulfide and bis(3-triethoxysilylpropyl) disulfide are more preferable, from the viewpoints of the coupling effect by the silane coupling agent, processability, and cost.

The content of the silane coupling agent is preferably 3 parts by mass or more, more preferably 5 parts by mass or more based on 100 parts by mass of the silica, from the viewpoints of low fuel economy and wear resistance of the rubber composition. The content of the silane coupling agent is preferably 15 parts by mass or less, more preferably 10 parts by mass or less based on 100 parts by mass of the silica, from the viewpoints of processability and cost of the rubber composition.

Examples of the plasticizer component include, but not limited to the following, an extender oil, a resin other than the above-mentioned polymers, an antioxidant, wax, stearic acid, and a vulcanization accelerator. These may be used singly or in combinations of two or more kinds thereof.

Examples of the extender oil include, but not limited to the following, an aromatic mineral oil (viscosity gravity constant (V.G.C. value) from 0.900 to 1.049), a naphthene-based mineral oil (V.G.C. value from 0.850 to 0.899), and a paraffin-based mineral oil (V.G.C. value from 0.790 to 0.849).

The aromatic polycyclic content in the extender oil is preferably less than 3 mass%, more preferably less than 1 mass%. The aromatic polycyclic content in the extender oil can be measured according to the Institute of Petroleum (IP, U.K.) 346/92 method. The content (CA) of the aromatic compound in the extender oil is preferably 20 mass% or more. Such extender oils may be used singly or in combinations of two or more kinds thereof.

The content of the extender oil is preferably 5 parts by mass or more, more preferably 10 parts by mass or more based on 100 parts by mass of the rubber component from the viewpoint of Mooney viscosity. The content of the extender oil is preferably 50 parts by mass or less, more preferably 40 parts by mass or less based on 100 parts by mass of the rubber component from the viewpoint of low hysteresis loss properties and hardness of the rubber composition.

Examples of the resin include, but not limited to the following, a C5 petroleum resin, a C9 petroleum resin, a coumarone-indene resin, an indene resin, a phenolic resin, and copolymer(s) of α-methylstyrene and/or styrene.

These may be used singly or in combinations of two or more kinds thereof. In particular, a coumarone-indene resin, a phenolic resin (in particular, terpene phenol resin), and copolymer(s) of α-methylstyrene and/or styrene are preferable, and a copolymer of α-methylstyrene and styrene is more preferable.

The content of the resin is preferably 1 part by mass or more, more preferably 3 parts by mass or more based on 100 parts by mass of the rubber component from the viewpoint of wet grip performance of the rubber composition. The content of the resin is preferably 20 parts by mass or less, more preferably 10 parts by mass or less based on 100 parts by mass of the rubber component from the viewpoint of low hysteresis loss properties of the rubber composition.

Examples of the antioxidant include, but not limited to the following, naphthylamine-based antioxidants such as phenyl-α-naphthylamine; diphenylamine-based antioxidants such as octylated diphenylamine and 4,4'-bis(α,α'-dimethylbenzyl)diphenylamine; p-phenylenediamine-based antioxidants such as N-phenyl-N'-isopropyl-p-phenylenediamine, N-(1,3-dimethylbutyl)-N'-phenyl-p-phenylenediamine, and N,N'-di-2-naphthyl-p-phenylenediamine; quinoline-based antioxidants such as a polymerized product of 2,2,4-trimethyl-1,2-dihydroquinoline; monophenol-based antioxidants such as 2,6-di-t-butyl-4-methylphenol and styrenated phenol; and bis, tris, and polyphenol-based antioxidants such as tetrakis-[methylene-3-(3',5'-di-t-butyl-4'-hydroxyphenyl)propoinate]methane.

These may be used singly or in combinations of two or more kinds thereof. In particular, a p-phenylenediamine-based antioxidant is preferable, and N-phenyl-N'-isopropyl-p-phenylenediamine is more preferable.

The content of the antioxidant is preferably from 0.1 to 5 parts by mass, more preferably from 0.2 to 4 parts by mass based on 100 parts by mass of the rubber component.

Examples of the wax include, but not limited to the following, petroleum waxes such as paraffin wax and microcrystalline wax; natural waxes such as vegetable wax and animal wax; and synthetic waxes such as a polymerized product of ethylene, propylene, or the like.

These may be used singly or in combinations of two or more kinds thereof. In particular, petroleum wax is preferable and paraffin wax is more preferable.

The content of the wax is preferably from 0.1 to 5 parts by mass, more preferably from 0.2 to 4 parts by mass based on 100 parts by mass of the rubber component.

The stearic acid used can be conventionally known one, and examples thereof include, but not limited to the following, any product of NOF Corporation, NOF Corporation, Kao Corporation, FUJIFILM Wako Pure Chemical Corporation, and Chiba Fatty Acid Co., Ltd. These may be used singly or in combinations of two or more kinds thereof.

The content of the stearic acid is preferably from 0.1 to 5 parts by mass, more preferably from 0.2 to 4 parts by mass based on 100 parts by mass of the rubber component.

Examples of the vulcanization accelerator include, but not limited to the following, thiazole-based vulcanization accelerators such as 2-mercaptobenzothiazole, dibenzothiazyl disulfide, and N-cyclohexyl-2-benzothiazylsulfenamide; thiuram-based vulcanization accelerators such as tetramethyl thiuram monosulfide and tetramethyl thiuram disulfide; sulfenamide-based vulcanization accelerators such as N-cyclohexyl-2-benzothiazole sulfenamide, N-t-butyl-2-benzothiazole sulfenamide, N-oxyethylene-2-benzothiazole sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine.

These may be used singly or in combinations of two or more kinds thereof. In particular, a sulfenamide-based vulcanization accelerator is preferable and N-cyclohexyl-2-benzothiazole sulfonamide is more preferable because the effects of the present embodiment are more suitably obtained. A guanidine-based vulcanization accelerator is preferably used in combination.

The content of the vulcanization accelerator is preferably from 0.1 to 5 parts by mass, more preferably from 0.2 to 4 parts by mass based on 100 parts by mass of the rubber component.

The crosslinking agent component is not limited to the following, and can be appropriately selected depending on the object, and examples include a sulfur-based crosslinking agent, an organic peroxide-based crosslinking agent, an inorganic crosslinking agent, a polyamine crosslinking agent, a resin crosslinking agent, a sulfur compound-based crosslinking agent, and an oxime-nitrosoamine-based crosslinking agent. These may be used singly or in combinations of two or more kinds thereof. In particular, a sulfur-based crosslinking agent is preferable and sulfur is more preferable because the effects of the present embodiment are more suitably obtained. The content of the crosslinking agent in the rubber composition of the present embodiment is preferably 0.1 parts by mass or more and 20 parts by mass or less based on 100 parts by mass of the rubber component. The content is preferably 0.1 parts by mass or more, more preferably 0.5 parts by mass or more, further preferably 1.5 parts by mass or more. The content is preferably 20 parts by mass or less, more preferably 5 parts by mass or less, further preferably 3 parts by mass or less. Thus, the effects of the present embodiment are more suitably obtained.

A vulcanization accelerator can also be used in combination in the rubber composition of the present embodiment.

Examples of the vulcanization accelerator include guanidine-based, aldehyde-amine-based, aldehyde-ammonia-based, thiazole-based, sulfenamide-based, thiourea-based, thiuram-based, dithiocarbamate-based, and xanthate-based compounds.

The rubber composition of the present embodiment may contain, in addition to various components described above, any of various additives such as any other softener and filling agent, a heat-resistant stabilizer, an antistatic agent, a weathering stabilizer, an antioxidant, a colorant, and a lubricant.

A known softener can be used as such any other softener. Examples of such any other filling agent include calcium carbonate, magnesium carbonate, aluminum sulfate, and barium sulfate. Each known material can be used for the heat-resistant stabilizer, the antistatic agent, the weathering stabilizer, the antioxidant, the colorant, and the lubricant.

(Method for producing rubber composition)

The rubber composition containing the hydrogenated conjugated diene-based polymer of the present embodiment can be produced by a common method. For example, it can be produced by a method involving kneading each of the components by a Banbury mixer, a kneader, an open roll, or the like, and then performing vulcanization.

Examples

Hereinafter, the present embodiment is described in more detail with reference to specific Examples and Comparative Examples, but the present invention is not limited to the following Examples and Comparative Examples at all.

Various physical properties in Examples and Comparative Examples were measured by the following methods, and furthermore evaluated by methods described below.

[Methods for measuring physical properties]

(Amount of styrene in conjugated diene-based polymer)

A measurement sample was obtained by dissolving 100 mg of a specimen before hydrogenation in 100 mL of chloroform. The amount (mass%) of styrene bound, based on 100 mass% of the conjugated diene-based polymer as the specimen, was determined from the amount of absorption at a wavelength (around 254 nm) of ultraviolet light absorbed by a phenyl group of styrene.

The measurement apparatus here used was a spectrophotometer "UV-2450" manufactured by Shimadzu Corporation.

(Amount of 1,2-vinyl bond in butadiene portion of conjugated diene-based polymer)

A measurement sample was obtained by dissolving 50 mg of the specimen before hydrogenation in 10 mL of carbon disulfide.

An infrared spectrum was measured in the range from 600 to 1000 $cm^{-1}$ by use of a solution cell, and the amount (mol%) of a microstructure of a butadiene portion, namely, 1,2-vinyl bond, was determined from the absorbance at a predetermined wavenumber by the calculation expression according to the Hampton's method (method described in R.R. Hampton, Analytical Chemistry 21, 923 (1949)). The measurement apparatus here used was a Fourier transform infrared spectrophotometer "FT-IR230" manufactured by JASCO Corporation.

(Weight average molecular weights (Mw) and molecular weight distributions of hydrogenated conjugated diene-based polymer and ozonolysis product)

A GPC measurement apparatus in which three columns each receiving polystyrene-based gel as a filling agent were connected was used for measuring a chromatogram, and the weight average molecular weight (Mw) and the molecular weight distribution (Mw/Mn) of each of the hydrogenated conjugated diene-based polymer and the ozonolysis product were determined based on a calibration curve with standard polystyrene.

The target with respect to the molecular weight distribution (Mw/Mn) of the ozonolysis product of the hydrogenated conjugated diene-based polymer corresponded to the range of the molecular weight in terms of polystyrene, of 200 or more.

Specific measurement conditions are shown below.

Measurement was performed by injecting 20 $\mu$L of the following measurement liquid into the GPC measurement apparatus.

<Measurement conditions>

Eluent: tetrahydrofuran (THF) containing 5 mmol/L of triethylamine

Guard column: trade name "TSKguardcolumn SuperH-H" manufactured by Tosoh Corporation

Separation column: trade names "TSKgel SuperH5000", " TSKgel SuperH6000", and "TSKgel SuperH7000" manufactured by Tosoh Corporation, connected in the listed order.

Oven temperature: 40°C

Flow rate: 0.6 mL/min

Detector: RI detector (trade name "HLC8020" manufactured by Tosoh Corporation)

Measurement solution: measurement solution in which 10 mg of a specimen for measurement was dissolved in 20 mL of THF

<Method for producing ozonolysis product of hydrogenated conjugated diene-based polymer>

While a sample solution in which 100 mg of the hydrogenated conjugated diene-based polymer was dissolved in 100 mL of dichloromethane was cooled to - 30°C, 2% of oxygen having a concentration of ozone (O3), adjusted by an ozone generator, was allowed to pass through the sample solution at 150 mL/min, a gas coming from the sample solution was allowed to pass through a detection liquid (solution in which 6 droplets of an aqueous 3% starch solution was added to 75 mL of an aqueous 3% potassium iodide solution). After one minute from discoloration of the detection liquid to yellow, inflow of oxygen was stopped, and a sample solution of ozonide was thus obtained.

The resulting sample solution of ozonide was dropped at a rate of 6 mL/min into 50 mL of diethyl ether mixed with 0.5 g of lithium aluminum hydride, with cooling to -30°C under a nitrogen atmosphere, and thereafter the sample solution was refluxed at 50°C for 15 minutes to perform a reduction reaction. Next, 3 mL of pure water was dropped at a rate of 3 mL/min into the sample solution with cooling to - 30°C, to perform hydrolysis, furthermore 3 g of potassium carbonate was added to perform salting-out and filtration, and the solvent of the resulting filtrate was removed by an evaporator, to thereby obtain an ozonolysis product of the hydrogenated conjugated diene-based polymer.

(Area ratio S up to molecular weight at peak top assigned to ozonolysis product of hydrogenated conjugated diene-based polymer)

The area ratio S up to the molecular weight at a peak top assigned to the ozonolysis product was calculated by the following expression (I) with GPC (gel permeation chromatography) after decomposition by the above ozonolysis method, and the value was evaluated by the following indices.

O: an area ratio S of 40% or less, calculated by expression (I)

×: an area ratio S of more than 40%, calculated by expression (I)

Area ratio S up to molecular weight at peak top assigned to ozonolysis

$$\text{product} = A/B \times 100 \dots (I)$$

A: Area of peak from molecular weight of 200 of ozonolysis product to molecular weight at peak top assigned thereto, by GPC

B: Area of entire peak corresponding to molecular weight of 200 or more of ozonolysis product, by GPC

(Hydrogenation rate of hydrogenated conjugated diene-based polymer)

The integrated value with respect to the unsaturated bond moiety of a conjugated diene-based polymer before hydrogenation was obtained by $^1$H-NMR measurement. Next, a large amount of methanol was added to a reaction liquid after a hydrogenation reaction, to thereby precipitate and recover a hydrogenated conjugated diene-based polymer. Next, the hydrogenated conjugated diene-based polymer was extracted with acetone, and the hydrogenated conjugated diene-based polymer was dried in vacuum. The resultant was used as a sample for $^1$H-NMR measurement, and the hydrogenation rate was measured. Measurement conditions were noted below.

<Measurement conditions>

Measurement instrument: JNM-LA400 (manufactured by JEOL Ltd.)

Solvent: deuterated chloroform

Measurement sample: each product extracted before and after hydrogenation of polymer

Concentration of sample: 50 mg/mL

Frequency in observation: 400 MHz

Chemical shift standard: TMS (tetramethylsilane)

Pulse delay: 2.904 seconds

Number of scannings: 64

Pulse width: 45°

Measurement temperature: 26°C

(Amount of styrene block in hydrogenated conjugated diene-based polymer)

A chain having eight or more continuous styrene structural units was defined as a styrene block, and the amount of the styrene block was determined as follows. A $^1$H-NMR spectrum at 400 MHz, of a rubber-like polymer, was measured with deuterochloroform as a solvent. The percentage of the value of integral of each chemical shift range of the following (X) was determined from the spectrum, and the amount of the styrene block included in the rubber-like polymer was determined.

Chain having eight or more of continuous styrene: $6.00 \leq X < 6.68$

(Amount of ethylene structure in hydrogenated conjugated diene-based polymer)

The amount of the ethylene structure in the hydrogenated conjugated diene-based polymer was measured by use of the hydrogenated conjugated diene-based polymer according to $^1$H-NMR measurement. Conditions were noted below.

<Measurement conditions>

Measurement instrument: JNM-LA400 (manufactured by JEOL Ltd.)

Solvent: deuterated chloroform

Measurement sample: hydrogenated conjugated diene-based polymer

Concentration of sample: 50 mg/mL

Frequency in observation: 400 MHz

Chemical shift standard: TMS (tetramethylsilane)

Pulse delay: 2.904 seconds

Number of scannings: 64

Pulse width: 45°

Measurement temperature: 26°C

(Percentage of modification of hydrogenated conjugated diene-based polymer)

The percentage of modification of the hydrogenation conjugated diene polymer of each of Examples and Comparative Examples described below was measured by a column adsorption GPC method.
Measurement was performed by use of the property of a conjugated diene polymer modified by a nitrogen atom-containing functional group to adsorb to a column.
The amount of adsorption to a silica-based column was measured by the difference between a chromatogram obtained by subjecting a specimen solution including the specimen and internal standard polystyrene low in molecular weight to measurement with a polystyrene-based column, and a chromatogram obtained by subjecting the specimen solution to measurement with the silica-based column, and thus the percentage of modification was determined.
The detail was specifically as shown below.

<Preparation of specimen solution>:

A specimen solution was obtained by dissolving 10 mg of a specimen for measurement and 5 mg of standard polystyrene in 20 mL of THF (tetrahydrofuran).

<GPC measurement conditions with polystyrene-based column>:

THF containing 5 mmol/L of triethylamine was used as an eluent, and 20 $\mu$L of the specimen solution was injected into the apparatus, to thereby perform measurement. The columns here used were a guard column: trade name "TSKguardcolumn SuperH-H" manufactured by Tosoh Corporation, and columns: trade names "TSKgel SuperH5000", "TSKgel SuperH6000", and "TSKgel SuperH7000" manufactured by Tosoh Corporation. Measurement was performed with an RI detector (HLC8020 manufactured by Tosoh Corporation) under conditions of a column oven temperature of 40°C and a flow rate of THF of 0.6 mL/min, to thereby obtain a chromatogram.

<GPC measurement conditions with silica-based column>:

A column of trade name "HLC-8320GPC" manufactured by Tosoh Corporation was used and THF was used as an eluent, 50 $\mu$L of the specimen solution was injected into the apparatus, and a chromatogram was obtained with the RI detector under conditions of a column oven temperature of 40°C and a flow rate of THF of 0.5 ml/min. Columns of trade names "Zorbax PSM-1000S", "PSM-300S", and "PSM-60S" were connected and then used, and a guard column of trade name "DIOL 4.6 × 12.5 mm 5 micron" was connected to the previous stage thereof and then used.

<Method for calculating percentage of modification>:

Under the assumption that the entire peak area of the chromatogram with the polystyrene-based column was 100, and the peak area assigned to the specimen was P1 and the peak area assigned to standard polystyrene was P2, as well as the entire peak area of the chromatogram with the silica-based column was 100, and the peak area assigned to the specimen was P3 and the peak area assigned to standard polystyrene was P4, the percentage (%) of modification was determined by the following expression.

$$\text{Percentage (\%) of modification} = [1 - (P2 \times P3)/(P1 \times P4)] \times 100$$

(in the expression, P1 + P2 = P3 + P4 = 100)

[Methods for evaluating properties]

(Mooney viscosity (ML) of hydrogenated conjugated diene-based polymer)

The Mooney viscosity was measured with a Mooney viscometer (trade name "VR1132" manufactured by Ueshima Seisakusho Co., Ltd.), according to ISO 289. The Mooney viscosity ($ML_{(1+4)}$) was obtained by pre-heating the specimen at 100°C for 1 minute, then rotating a L type rotor at 2 rpm for 4 minutes, and measuring the torque after 4 minutes.

(Cold-flow resistance of hydrogenated conjugated diene-based polymer)

The specimen warmed to 60°C was filled in a cuboid container having dimensions of a longer side of 210 mm, a shorter side of 105 mm, and a depth of 200 mm, and compacted under application of a pressure of 3.5 MPa by a cylinder for 10 seconds, to thereby obtain a cuboid molded body. The cuboid molded body obtained was used and left to still stand at an exterior temperature of 25°C and a humidity of 50% under application of a load of 5 kg for 72 hours, to determine the thickness (H72), and thus the percentage (%) of change in thickness was calculated by the following expression and furthermore the index of change in thickness was calculated.

$$\text{Percentage (\%) of change in thickness} = (H0 - H72) \times 100/H0$$

Index of change in thickness = (Percentage of change in thickness of hydrogenated conjugated diene-based polymer as reference)/(Percentage of change in thickness of hydrogenated conjugated diene-based polymer as evaluation subject) × 100 H0 represents the thickness of the specimen immediately after molding.
It is indicated that, as the percentage of change in thickness and the index of change in thickness are smaller, cold flow of the specimen during storage is smaller and handleability is more excellent.
The index of change in thickness of the hydrogenated conjugated diene-based polymer as an evaluation subject were evaluated by the following indices. (see Table 1 below, with respect to hydrogenated conjugated diene-based polymer as reference)

◎: an index of change in thickness of 140 or more

○: an index of change in thickness of 120 or more and less than 140

△: an index of change in thickness of 80 or more and less than 120

×: an index of change in thickness of less than 80

[Production of hydrogenated conjugated diene-based polymer]

(Preparation of hydrogenation catalyst)

A hydrogenation catalyst for use in the preparation of hydrogenated conjugated diene-based polymer in each of Examples and Comparative Examples described below was prepared by the following method.

A reaction container purged with nitrogen was charged with 1 L of cyclohexane dried and purified, 100 mmol of bis($\eta$5-cyclopentadienyl)titanium chloride was added thereto, and a n-hexane solution including 200 mmol of trimethylaluminum was added thereto with sufficient stirring, to perform a reaction at room temperature for about 3 days, thereby obtaining a hydrogenation catalyst.

(Example 1: production of hydrogenated conjugated diene-based polymer A1)

To an autoclave reactor having an inner volume of 40 **L,** purged with nitrogen, were loaded 22000 g of cyclohexane, 30 mmol of tetrahydrofuran (THF), 7.0 mmol of 2,2-di(2-tetrahydrofuryl)propane, 450 g of styrene, and 2550 g of 1,3-butadiene. The temperature of the content of the reactor was adjusted to 43°C, and thereafter a cyclohexane solution including 40.0 mmol of n-butyllithium was added and polymerization was initiated and performed in thermal insulation conditions.

After 2 minutes after the reaction temperature reached the peak temperature, 8.0 mmol of 2,2-dimethoxy-1-(3-(trimethoxysilyl)propyl)-1,2-azasilolidine was added as a modifying agent, and the resultant was subjected to a reaction to an active site of a polymer for 20 minutes. Thereafter, 8.0 mmol of methanol was added as a reaction stopping agent to this polymer solution, to thereby obtain a conjugated diene-based polymer solution before hydrogenation.

In the subsequent hydrogenation reaction step, a reactor was used which was equipped with a rotary stirring machine having a rotational speed of 114 rpm, which had an inner volume of 40 L and an L/D (L: height of reactor, D: diameter of reactor) of 2.2, and which had three nozzles at each of a top portion and a bottom portion (respectively, top portion: nozzle A and nozzle B and nozzle C, bottom portion: nozzle D and nozzle E and nozzle F) and furthermore one nozzle at a central side portion of the reactor (defined as nozzle G).

The temperature of the reactor was adjusted to 90°C, thereafter the conjugated diene-based polymer solution obtained above (concentration of polymer: 12 mass%) was supplied at a rate so that the amount of the polymer through the nozzle A at the top portion of the reactor was 1.7kg/h, furthermore the hydrogenation catalyst adjusted as described above was added to 100 ppm of the polymer solution on a titanium basis relative to the amount of the monomer loaded, and extraction was made through the nozzle D at the lower portion of the reactor with adjustment so that the level of the liquid surface in the reactor corresponded to 60%. Here, the average residence time $\tau$ of the polymer was 70 minutes, and the H/D (H: height of liquid surface, D: diameter of reactor) was 1.3.

Thereafter, hydrogen was instantly introduced into the reactor through the nozzle E at the lower portion of the reactor so as to be at 0.6 MPa, to immediately stop supplying. Then, the polymer flowing out through the extraction nozzle D of the reactor was sampled every 10 minutes, and the hydrogenation rate was measured.

The results of the percentages of hydrogenation obtained were plotted with respect to the average residence time $\tau$, based on the impulse response method, and fitting was made according to the following expression (2), to obtain an approximate value of 1.1 as the number N of complete mixing tanks.

$$F(\tau) = 1 - e^{-N\tau} \sum_{n=1}^{N} \frac{(N\tau)^{n-1}}{(n-1)!} \quad \cdot \cdot \cdot \quad (2)$$

The above reactor conditions were again adopted and hydrogen was continuously supplied so as to be at 0.6 MPa, to perform the hydrogenation reaction.

Next, 12.6 g of n-octadecyl-3-(3,5-di-t-butyl-4-hydroxyphenyl)-propionate as an antioxidant and 3.0 g of 4,6-bis(octylthiomethyl)- o-cresol were added into the hydrogenated conjugated diene-based polymer solution obtained. Thereafter, an aqueous solution (temperature: 80°C) adjusted to a pH of 8.5 (pH at 80°C according to a glass electrode method, the same applied to the following.) by ammonia as a pH adjuster was placed in a solvent removal tank, the hydrogenated conjugated diene-based polymer solution was further added into the solvent removal tank (at a proportion of the aqueous solution, of 200 parts by mass, based on 100 parts by mass of the polymer solution), and solvent removal was performed in a liquid phase (temperature: 95°C) of the solvent removal tank by steam stripping (steam temperature: 190°C) for 2 hours. Thereafter, the remaining water was dried by a drying machine, to thereby obtain hydrogenated conjugated diene-based polymer A1.

The values of analysis of hydrogenated conjugated diene-based polymer A1 are shown in Table 3 below.

(Comparative Example 1: production of hydrogenated conjugated diene-based polymer A1')

To an autoclave reactor having an inner volume of 40 L, purged with nitrogen, were loaded 22000 g of cyclohexane, 30 mmol of tetrahydrofuran (THF), 7.0 mmol of 2,2-di(2-tetrahydrofuryl)propane, 450 g of styrene, and 2550 g of 1,3-butadiene. After the temperature of the content of the reactor was adjusted to 43°C, a cyclohexane solution including 40.0 mmol of n-butyllithium was added and polymerization was initiated and performed in thermal insulation conditions.

After 2 minutes after the reaction temperature reached the peak temperature, 8.0 mmol of 2,2-dimethoxy-y-1-(3-(trimethoxysilyl)propyl)-1,2-azasilolidine was added as a modifying agent, and the resultant was subjected to a reaction to an active site of a conjugated diene-based polymer for 20 minutes. Thereafter, 8.0 mmol of methanol was added as a reaction stopping agent to this conjugated diene-based polymer solution, to thereby obtain a conjugated diene-based polymer solution before hydrogenation.

In the subsequent hydrogenation reaction step, a reactor was used which was equipped with a rotary stirring machine having a rotational speed of 114 rpm and which had an inner volume of 40 L and an L/D of 2.2. After the temperature of the reactor was adjusted to 90°C, the entire amount of the conjugated diene-based polymer solution obtained above (concentration of polymer: 12 mass%) was filled in the reactor, furthermore the hydrogenation catalyst adjusted as described above was added to 100 ppm of the conjugated diene-based polymer solution, and the hydrogenation reaction was performed for 70 minutes with hydrogen being filled into the reactor so that 0.6 MPa was achieved. Next, 12.6 g of n-octadecyl-3-(3,5-di-t-butyl-4-hydroxyphenyl)-propionate as an antioxidant and 3.0 g of 4,6-bis(octylthiomethyl)- o-cresol were added into the polymer solution obtained, thereafter an aqueous solution (temperature: 80°C) adjusted to a pH of 8.5 (pH at 80°C according to a glass electrode method, the same applied to the following.) by ammonia as a pH adjuster was placed in a solvent removal tank, the hydrogenated conjugated diene-based polymer solution was further added into the solvent removal tank (at a proportion of the aqueous solution, of 200 parts by mass, based on 100 parts by mass of the polymer solution), and solvent removal was performed in a liquid phase (temperature: 95°C) of the solvent removal tank by steam stripping (steam temperature: 190°C) for 2 hours. Thereafter, the remaining water was dried by a drying machine, to thereby obtain hydrogenated conjugated diene-based polymer A1'.

The values of analysis of hydrogenated conjugated diene-based polymer A1' are shown in Table 3.

(Example 2: production of hydrogenated conjugated diene-based polymer A2)

To an autoclave reactor having an inner volume of 40 L, purged with nitrogen, were loaded 22000 g of cyclohexane, 30 mmol of tetrahydrofuran (THF), 7.0 mmol of 2,2-di(2-tetrahydrofuryl)propane, and 240 g of styrene, the temperature of the content of the reactor was adjusted to 43°C, and thereafter a cyclohexane solution including 40.0 mmol of n-butyllithium was added and polymerization was initiated and performed in thermal insulation conditions for 10 minutes. Thereafter, hydrogenated conjugated diene-based polymer A2 was obtained by the same method as in Example 1 except that 210 g of styrene and 2550 g of 1,3-butadiene were further added to perform polymerization in thermal insulation conditions.

(Comparative Example 2: production of hydrogenated conjugated diene-based polymer A2')

To an autoclave reactor having an inner volume of 40 L, purged with nitrogen, were loaded 22000 g of cyclohexane, 30 mmol of tetrahydrofuran (THF), 7.0 mmol of 2,2-di(2-tetrahydrofuryl)propane, and 360 g of styrene, the temperature of the content of the reactor was adjusted to 43°C, and thereafter a cyclohexane solution including 40.0 mmol of n-butyllithium was added and polymerization was initiated and performed in thermal insulation conditions for 10 minutes. Thereafter, hydrogenated conjugated diene-based polymer A2' was obtained by the same method as in Example 1 except that 90 g of styrene and 2550 g of 1,3-butadiene were further added to perform polymerization in thermal insulation conditions.

(Comparative Example 3: production of hydrogenated conjugated diene-based polymer A3')

Hydrogenated conjugated diene-based polymer A3' was obtained by the same method as in Comparative Example 1 except that the reaction time of the hydrogenation step was 100 minutes.

(Comparative Example 4: production of hydrogenated conjugated diene-based polymer A4')

Hydrogenated conjugated diene-based polymer A4' was obtained by the same method as in Example 1 except that 56 mmol of 2,2-di(2-tetrahydrofuryl)propane, 320 mmol of n-butyllithium, 64 mmol of 2,2-dimethoxy-1-(3-(trimethoxysilyl)propyl)-1,2-azasilolidine, and 64 mmol of methanol were used.

(Comparative Example 5: production of hydrogenated conjugated diene-based polymer A5')

Hydrogenated conjugated diene-based polymer A5' was obtained by the same method as in Example 1 except that 1.2 mmol of 2,2-di(2-tetrahydrofuryl)propane, 6.4 mmol of n-butyllithium, 1.3 mmol of 2,2-dimethoxy-1-(3-(trimethoxysilyl)propyl)-1,2-azasilolidine, and 1.3 mmol of methanol were used.

(Example 6: production of hydrogenated conjugated diene-based polymer A3)

Hydrogenated conjugated diene-based polymer A3 was obtained by the same method as in Example 1 except that 6.1 mmol of 2,2-di(2-tetrahydrofuryl)propane, 35 mmol of n-butyllithium, and 35 mmol of methanol were used and no 2,2-dimethoxy-1-(3-(trimethoxysilyl)propyl)-1,2-azasilolidine was added.

(Comparative Example 6: production of hydrogenated conjugated diene-based polymer A6')

Hydrogenated conjugated diene-based polymer A6' was obtained by the same method as in Comparative Example 1 except that 6.1 mmol of 2,2-di(2-tetrahydrofuryl)propane, 35 mmol of n-butyllithium, and 35 mmol of methanol were used and no 2,2-dimethoxy-1-(3-(trimethoxysilyl)propyl)-1,2-azasilolidine was added.

(Example 4: production of hydrogenated conjugated diene-based polymer A4)

Hydrogenated conjugated diene-based polymer A4 was obtained by the same method as in Example 1 except that 6.1 mmol of 2,2-di(2-tetrahydrofuryl)propane, 35 mmol of n-butyllithium, 28 mmol of 1,3-dimethyl-2-imidazolidinone, and 7.0 mmol of methanol were used.

(Comparative Example 7: production of hydrogenated conjugated diene-based polymer A7')

Hydrogenated conjugated diene-based polymer A7' was obtained by the same method as in Comparative Example 1 except that 6.1 mmol of 2,2-di(2-tetrahydrofuryl)propane, 35 mmol of n-butyllithium, 28 mmol of 1,3-dimethyl-2-imidazolidinone, and 7.0 mmol of methanol were used.

(Example 5: production of hydrogenated conjugated diene-based polymer B1)

Hydrogenated conjugated diene-based polymer B1 was obtained by the same method as in Example 1 except that 4.6 mmol of 2,2-di(2-tetrahydrofuryl)propane, 120 g of styrene, and 2880 g of 1,3-butadiene were used.

(Comparative Example 8: production of hydrogenated conjugated diene-based polymer B1')

Hydrogenated conjugated diene-based polymer B1' was obtained by the same method as in Comparative Example 1 except that 4.6 mmol of 2,2-di(2-tetrahydrofuryl)propane, 120 g of styrene, and 2880 g of 1,3-butadiene were used.

(Example 6: production of hydrogenated conjugated diene-based polymer B2)

Hydrogenated conjugated diene-based polymer B2 was obtained by the same method as in Example 1 except that 11.6 mmol of 2,2-di(2-tetrahydrofuryl)propane, 240 g of styrene, and 2760 g of 1,3-butadiene were used.

(Comparative Example 9: production of hydrogenated conjugated diene-based polymer B2')

Hydrogenated conjugated diene-based polymer B2' was obtained by the same method as in Comparative Example 1 except that 11.6 mmol of 2,2-di(2-tetrahydrofuryl)propane, 240 g of styrene, and 2760 g of 1,3-butadiene were used.

(Example 7: production of hydrogenated conjugated diene-based polymer B3)

Hydrogenated conjugated diene-based polymer B3 was obtained by the same method as in Example 1 except that 19.5 mmol of 2,2-di(2-tetrahydrofuryl)propane, 780 g of styrene, and 2220 g of 1,3-butadiene were used.

(Comparative Example 10: production of hydrogenated conjugated diene-based polymer B3')

Polymer B3' was obtained by the same method as in Comparative Example 1 except that 19.5 mmol of 2,2-di(2-tetrahydrofuryl)propane, 780 g of styrene, and 2220 g of 1,3-butadiene were used.

(Example 8: production of hydrogenated conjugated diene-based polymer B4)

Hydrogenated conjugated diene-based polymer B4 was obtained by the same method as in Example 1 except that 11.6 mmol of 2,2-di(2-tetrahydrofuryl)propane, 1200 g of styrene, and 1800 g of 1,3-butadiene were used.

(Comparative Example 11: production of hydrogenated conjugated diene-based polymer B4')

Hydrogenated conjugated diene-based polymer B4' was obtained by the same method as in Comparative Example 1 except that 11.6 mmol of 2,2-di(2-tetrahydrofuryl)propane, 1200 g of styrene, and 1800 g of 1,3-butadiene were used.

(Example 9: production of hydrogenated conjugated diene-based polymer B5)

Hydrogenated conjugated diene-based polymer B5 was obtained by the same method as in Example 1 except that no styrene was added and 3000 g of 1,3-butadiene was used.

(Comparative Example 12: production of hydrogenated conjugated diene-based polymer B5')

Hydrogenated conjugated diene-based polymer B5' was obtained by the same method as in Comparative Example 1 except that no styrene was added and 3000 g of 1,3-butadiene was used.

(Example 10: production of hydrogenated conjugated diene-based polymer C1)

Hydrogenated conjugated diene-based polymer C1 was obtained by the same method as in Example 1 except that 11.6 mmol of 2,2-di(2-tetrahydrofuryl)propane, 240 g of styrene, and 2760 g of 1,3-butadiene were used.

(Example 11: production of hydrogenated conjugated diene-based polymer C2)

Hydrogenated conjugated diene-based polymer C2 was obtained by the same method as in Example 1 except that 11.6 mmol of 2,2-di(2-tetrahydrofuryl)propane, 240 g of styrene, and 2760 g of 1,3-butadiene were used and the rate of the polymer supplied in the hydrogenation reaction step was 1.5 kg/h.

(Example 12: production of hydrogenated conjugated diene-based polymer C3)

Hydrogenated conjugated diene-based polymer C3 was obtained by the same method as in Example 1 except that 11.6 mmol of 2,2-di(2-tetrahydrofuryl)propane, 240 g of styrene, and 2760 g of 1,3-butadiene were used and the rate of the polymer supplied in the hydrogenation reaction step was 1.2 kg/h.

(Example 13: production of hydrogenated conjugated diene-based polymer C4)

Hydrogenated conjugated diene-based polymer C4 was obtained by the same method as in Example 1 except that 11.6 mmol of 2,2-di(2-tetrahydrofuryl)propane, 240 g of styrene, and 2760 g of 1,3-butadiene were used and the rate of the polymer supplied in the hydrogenation reaction step was 2.7 kg/h.

(Example 14: production of hydrogenated conjugated diene-based polymer C5)

Hydrogenated conjugated diene-based polymer C5 was obtained by the same method as in Example 1 except that 11.6 mmol of 2,2-di(2-tetrahydrofuryl)propane, 240 g of styrene, and 2760 g of 1,3-butadiene were used and the rate of the polymer supplied in the hydrogenation reaction step was 3.3 kg/h.

(Example 15: production of hydrogenated conjugated diene-based polymer C6)

Hydrogenated conjugated diene-based polymer C6 was obtained by the same method as in Example 1 except that 11.6 mmol of 2,2-di(2-tetrahydrofuryl)propane, 240 g of styrene, and 2760 g of 1,3-butadiene were used and the rate of the polymer supplied in the hydrogenation reaction step was 5.8 kg/h.

(Comparative Example 13: production of hydrogenated conjugated diene-based polymer C1')

Hydrogenated conjugated diene-based polymer C1' was obtained by the same method as in Comparative Example 1 except that 11.6 mmol of 2,2-di(2-tetrahydrofuryl)propane, 240 g of styrene, and 2760 g of 1,3-butadiene were used.

(Comparative Example 14: production of hydrogenated conjugated diene-based polymer C2')

Hydrogenated conjugated diene-based polymer C2' was obtained by the same method as in Comparative Example 1 except that 11.6 mmol of 2,2-di(2-tetrahydrofuryl)propane, 240 g of styrene, and 2760 g of 1,3-butadiene were used and the hydrogenation reaction step was not carried out.

(Comparative Example 15: production of hydrogenated conjugated diene-based polymer C3')

Hydrogenated conjugated diene-based polymer C3' was obtained by the same method as in Comparative Example 1 except that 11.6 mmol of 2,2-di(2-tetrahydrofuryl)propane, 240 g of styrene, and 2760 g of 1,3-butadiene were used and the reaction time of the hydrogenation step was 35 minutes.

(Comparative Example 16: production of hydrogenated conjugated diene-based polymer C4')

Hydrogenated conjugated diene-based polymer C4' was obtained by the same method as in Comparative Example 1 except that 11.6 mmol of 2,2-di(2-tetrahydrofuryl)propane, 240 g of styrene, and 2760 g of 1,3-butadiene were used and the reaction time of the hydrogenation step was 20 minutes.

(Example 16: production of hydrogenated conjugated diene-based polymer D1)

Hydrogenated conjugated diene-based polymer D1 was obtained by the same method as in Example 1 except that 11.6 mmol of 2,2-di(2-tetrahydrofuryl)propane, 240 g of styrene, and 2760 g of 1,3-butadiene were used.

(Example 17: production of hydrogenated conjugated diene-based polymer D2)

Three hydrogenated conjugated diene-based polymers different in hydrogenation rate were obtained by the same method as in Example 1 except that 11.6 mmol of 2,2-di(2-tetrahydrofuryl)propane, 240 g of styrene, and 2760 g of 1,3-butadiene were used, the reaction times of the hydrogenation steps were respectively 81 minutes, 70 minutes, and 55 minutes, and one-third of the amount of the content was extracted at each of the times. Thereafter, the hydrogenated conjugated diene-based polymers obtained were mixed in equal amounts, to thereby obtain hydrogenated conjugated diene-based polymer D2. Here, the value of the distribution of the hydrogenation rate HWD was 1.01.

(Example 18: production of hydrogenated conjugated diene-based polymer D3)

Five hydrogenated conjugated diene-based polymers different in hydrogenation rate were obtained by the same method as in Example 1 except that 11.6 mmol of 2,2-di(2-tetrahydrofuryl)propane, 240 g of styrene, and 2760 g of 1,3-butadiene were used, and the reaction times of the hydrogenation steps were changed respectively at five levels of 105 minutes, 81 minutes, 70 minutes, 55 minutes, and 42 minutes (one-fifth of the amount of the content was extracted at each of the times). Thereafter, these five hydrogenated conjugated diene-based polymers obtained were mixed so that the respective contents were the same amounts, to thereby obtain hydrogenated conjugated diene-based polymer D3. Here, the value of the distribution of the hydrogenation rate HWD was 1.04.

(Example 19: production of hydrogenated conjugated diene-based polymer D4)

Hydrogenated conjugated diene-based polymer D4 was obtained by the same method as in Example 1 except that 11.6 mmol of 2,2-di(2-tetrahydrofuryl)propane, 240 g of styrene, and 2760 g of 1,3-butadiene were used, and the polymer solution was supplied through the nozzle F at the bottom portion of the reactor and extracted through the nozzle B at the top portion of the reactor in the hydrogenation step. Here, the number of complete mixing tanks by the impulse response method, the value of N, was 2.3.

(Example 20: production of hydrogenated conjugated diene-based polymer D5)

Hydrogenated conjugated diene-based polymer D5 was obtained by the same method as in Example 1 except that 11.6 mmol of 2,2-di(2-tetrahydrofuryl)propane, 240 g of styrene, and 2760 g of 1,3-butadiene were used and the rotational speed in the hydrogenation step was 70 rpm. Here, the number of complete mixing tanks by the impulse response method, the value of N, was 1.3.

(Example 21: production of hydrogenated conjugated diene-based polymer D6)

Hydrogenated conjugated diene-based polymer D6 was obtained by the same method as in Example 19 except that 11.6 mmol of 2,2-di(2-tetrahydrofuryl)propane, 240 g of styrene, and 2760 g of 1,3-butadiene were used, 20% of the polymer solution supplied through the nozzle A at the top portion of the reactor was supplied through the nozzle G at the central side portion of the reactor, and the number N of complete mixing tanks was changed to 1.2 in the hydrogenation step. Here, the number of complete mixing tanks by the impulse response method, the value of N, was 1.2.

(Example 22: production of hydrogenated conjugated diene-based polymer D7)

Hydrogenated conjugated diene-based polymer D7 was obtained by the same method as in Example 1 except that 11.6 mmol of 2,2-di(2-tetrahydrofuryl)propane, 240 g of styrene, and 2760 g of 1,3-butadiene were used, the rotational speed in the hydrogenation step was 20 rpm, the amount of the polymer supplied was 2.3 kg/h, and the level of the liquid surface in the reactor was 80%. Here, the H/D (H: height of liquid surface, D: diameter of reactor) was 1.8, and the number of complete mixing tanks by the impulse response method, the value of N, was 2.2.

(Comparative Example 17: production of hydrogenated conjugated diene-based polymer D1')

Hydrogenated conjugated diene-based polymer D1' was obtained by the same method as in Comparative Example 1 except that 11.6 mmol of 2,2-di(2-tetrahydrofuryl)propane, 240 g of styrene, and 2760 g of 1,3-butadiene were used.

[Evaluation of rubber compositions respectively including hydrogenated conjugated diene-based polymers A1 to D1']

Each rubber composition was obtained by mixing components according to each compounding content shown in Table 2 below, by a method described below.
The amount of each compounding agent in Table 2 was expressed with "parts by mass" based on 100 parts by mass of a rubber component including no softener for rubber, namely, each of the hydrogenated conjugated diene-based polymers.

(Kneading method)

An airtight kneading machine (an inner volume of 0.5 L) equipped with a temperature control apparatus was used, and materials other than sulfur and a vulcanization accelerator were kneaded as kneading at the first stage in conditions of a percentage of filling of 65% and a rotational speed of rotor of from 50 to 90 rpm. A compounded product was obtained at a temperature of discharge of from 150 to 160°C with the temperature of the airtight airtight machine being controlled.
Next, the compounded product obtained above was cooled to room temperature and then kneaded again as kneading at the second stage in order to enhance dispersing of a reinforcement filling agent. Also in this case, the temperature of discharge of the compounded product was adjusted to from 150 to 160°C by temperature control of the mixing machine.
After cooling, a vulcanization accelerator and sulfur were added and kneaded in an open roll set to 70°C, as kneading at the third stage, to thereby obtain an unvulcanized rubber composition.
Thereafter, the resultant was molded, and vulcanized by vulcanization press at 160°C for a predetermined vulcanization time, to thereby obtain each rubber composition after vulcanization. The vulcanization time was a value obtained by adding 5 minutes to the time for vulcanization of 90% of an unvulcanized rubber composition.
The rubber composition after vulcanization was evaluated by the following methods.

[Evaluation items and test methods]

The unvulcanized rubber compositions and vulcanized rubber compositions obtained were evaluated as described below. The results are shown in Table 3 to Table 6 below.

((1) Processability (Mooney viscosity (ML of compounded product)))

The unvulcanized rubber composition obtained above was adopted as a specimen, and the viscosity after preliminary heating at 130°C for 1 minute and then rotation of a rotor at 2 rpm for 4 minutes was measured with a Mooney viscometer (trade name "VR1132" manufactured by Ueshima Seisakusho Co., Ltd.), according to ISO 289.
The measurement results were indexed under the assumption that the measurement result with respect to an unvulcanized rubber composition of a comparative hydrogenated conjugated diene-based polymer as reference was 100, and were rated according to the following indices.
The hydrogenated conjugated diene-based polymer as reference is shown in Table 1 below.

◎: an index of less than 80

O: an index of 80 or more and less than 90

△: an index of 90 or more and less than 110

✕: an index of 110 or more

((2) Tensile characteristics)

The vulcanized rubber composition obtained above was used as a specimen, and tensile characteristics were measured according to the tensile test method of JIS K6251.
The measurement results were indexed under the assumption that the measurement result with respect to a vulcanized rubber composition of a comparative hydrogenated conjugated diene-based polymer as reference was 100, and were rated according to the following indices.
The hydrogenated conjugated diene-based polymer as reference is shown in Table 1 below.

<Tensile strength (TB)>

◎: an index of 120 or more

○: an index of 110 or more and less than 120

△: an index of 90 or more and less than 110

✕: an index of less than 90

<Percentage of tensile elongation (EB)>

◎: an index of 120 or more

○: an index of 110 or more and less than 120

△: an index of 90 or more and less than 110

✕: an index of less than 90

((3) Ozone resistance)

A strip-shaped sample (6 cm length × 1 cm width × 2.0 mm thickness) was punched from the vulcanized rubber composition obtained above, placed in an ozone tank (40°C, 50 pphm), and left to still stand in a state of being elongated at 20% for 96 hours. Thereafter, the strip-shaped sample (vulcanized rubber sheet) was observed, and the number of cracks each having a length of 1 mm or more, present on the surface, was counted. The measurement results were indexed under the assumption that the number of cracks with respect to a vulcanized rubber sheet of a comparative hydrogenated conjugated diene-based polymer as reference was 100, and were rated according to the following indices.
The hydrogenated conjugated diene-based polymer as reference is shown in Table 1 below.

◎: an index of less than 60, or no occurrence of any cracks on vulcanized rubber sheet

○: an index of 60 or more and less than 80

△: an index of 80 or more and less than 120

×: an index of 120 or more, or breaking of vulcanized rubber sheet

((4) Fuel-saving performance)

The tanδ measured in a torsional mode at a frequency of 10 Hz and a strain of 3% at 50°C, with a viscoelasticity tester "ARES" manufactured by Rheometric Scientific, Inc., was defined as the index of fuel-saving economy. The measurement results were indexed under the assumption that the measurement result with respect to a vulcanized rubber composition of a comparative hydrogenated conjugated diene-based polymer as reference was 100, and were rated according to the following indices.
The hydrogenated conjugated diene-based polymer as reference is shown in Table 1 below.

◎: an index of less than 80

O: an index of 80 or more and less than 90

△: an index of 90 or more and less than 110

×: an index of 110 or more

The trade names of those used for respective components in Table 2 below are as follows.

· Hydrogenated conjugated diene-based polymers: A1 to D1'

· Natural rubber: RSS No.3 (producer: UNIMAC RUBBER CO., LTD.(Thailand), supplier: Marubeni Techno Rubber Corporation)

· Carbon black: Seast SO (FEF) (nitrogen adsorption specific surface area 42 $m^2/g$) manufactured by Tokai Carbon Co., Ltd.

· Softener: process oil PF30 (SRAE oil) manufactured by JXTG Nippon Oil & Energy Corporation

· Zinc flower: zinc oxide manufactured by SAKAI CHEMICAL INDUSTRY CO., LTD.

· Stearic acid: Lunac S-90V manufactured by Kao Corporation

· Wax: Sunnoc manufactured by Ouchi Shinko Chemical Industrial Co., Ltd.

· Antioxidant: Nocrac 6C manufactured by Ouchi Shinko Chemical Industrial Co., Ltd.

· Sulfur: powder sulfur, Sulfax 200S manufactured by Tsurumi Chemical Industry Co., ltd.

· Vulcanization accelerator: TBBS SANCELER NS-G (N-tert-butylbenzothiazole-2-sulfenamide) manufactured by SANSHIN CHEMICAL INDUSTRY CO., LTD.

[Table 1]

| Hydrogenated conjugated diene-based polymer as evaluation subject | Hydrogenated conjugated diene-based polymer as reference |
|---|---|
| Example 1 A1 | Comparative Example 1 A1' |
| Comparative Example 1 A1' | |
| Example 2 A2 | |
| Comparative Example 2 A2' | |
| Comparative Example 3 A3' | |
| Comparative Example 4 A4' | |
| Comparative Example 5 A5' | |
| Example 3 A3 | Comparative Example 6 A6' |
| Comparative Example 6 A6' | |
| Example 4 A4 | Comparative Example 7 A7' |
| Comparative Example 7 A7' | |
| | |
| Example 5 B1 | Comparative Example 8 B1' |
| Comparative Example 8 B1' | |
| Example 6 B2 | Comparative Example 9 B2' |
| Comparative Example 9 B2' | |
| Example 7 B3 | Comparative Example 10 B3' |
| Comparative Example 10 B3' | |
| Example 8 B4 | Comparative Example 11 B4' |
| Comparative Example 11 B4' | |
| Example 9 B5 | Comparative Example 12 B5' |
| Comparative Example 12 B5' | |
| | |
| Example 10 C1 | Comparative Example 13 C1' |
| Example 11 C2 | |
| Example 12 C3 | |
| Example 13 C4 | |
| Example 14 C5 | |
| Example 15 C6 | |
| Comparative Example 13 C1' | |
| Comparative Example 14 C2' | |
| Comparative Example 15 C3' | |
| Comparative Example 16 C4' | |
| | |

(continued)

| Hydrogenated conjugated diene-based polymer as evaluation subject | Hydrogenated conjugated diene-based polymer as reference |
|---|---|
| Example 16 D1 | Comparative Example 17 D1' |
| Example 17 D2 | |
| Example 18 D3 | |
| Example 19 D4 | |
| Example 20 D5 | |
| Example 21 D6 | |
| Example 22 D7 | |
| Comparative Example 17 D1' | |

[Table 2]

| Substance compounded | Part(s) per hundred [phr] |
|---|---|
| Hydrogenated conjugated diene-based polymer | 100 |
| Carbon black | 53 |
| Softener | 7 |
| Zinc flower | 3 |
| Stearic acid | 2 |
| Wax | 1 |
| Antioxidant | 3 |
| Sulfur | 1.6 |
| Vulcanization accelerator | 0.7 |

[Table 3]

| | Item | Example 1 | Comparative Example 1 | Example 2 | Comparative Example 2 | Comparative Example 3 | Comparative Example 4 | Comparative Example 5 | Example 3 | Comparative Example 6 | Example 4 | Comparative Example 7 |
|---|---|---|---|---|---|---|---|---|---|---|---|---|
| | Hydrogenated conjugated diene-based polymer No. | A1 | A1' | A2 | A2' | A3' | A4' | A5' | A3 | A6' | A4 | A7' |
| | Amount (wt%) of styrene bound | 15 | 15 | 15 | 15 | 15 | 15 | 15 | 15 | 15 | 15 | 15 |
| | Amount (mol% in butadiene) of 1,2-vinyl bond | 30 | 30 | 30 | 30 | 30 | 30 | 30 | 30 | 30 | 30 | 30 |
| | Total percentage (mol%) of hydrogenation | 75 | 75 | 75 | 75 | 95 | 75 | 75 | 75 | 75 | 75 | 75 |
| Polymer structure | Amount (wt%) of styrene block | <1 | <1 | 8 | 12 | <1 | <1 | <1 | <1 | <1 | <1 | <1 |
| | Amount (wt%) of ethylene structure | 39 | 39 | 39 | 39 | 56 | 39 | 39 | 39 | 39 | 39 | 39 |
| | Percentage (%) of modification | 75 | 75 | 75 | 75 | 75 | 75 | 75 | 0 | 0 | 75*1 | 75*1 |
| | Mw (× 10$^4$) after hydrogenation | 40 | 41 | 40 | 42 | 40 | 5 | 250 | 46 | 46 | 46 | 46 |
| | Mw/Mn after ozone decomposition | 2.84 | 1.56 | 2.89 | 2.91 | 1.80 | 2.78 | 2.90 | 2.86 | 1.54 | 2.85 | 1.56 |
| | Area ratio S up to molecular weight at peak top assigned to ozone decomposition product | ○ | × | ○ | ○ | × | ○ | ○ | ○ | × | ○ | × |

| | Item | Example 1 | Comparative Example 1 | Example 2 | Comparative Example 2 | Comparative Example 3 | Comparative Example 4 | Comparative Example 5 | Example 3 | Comparative Example 6 | Example 4 | Comparative Example 7 |
|---|---|---|---|---|---|---|---|---|---|---|---|---|
| | Hydrogenated conjugated diene-based polymer No. | A1 | A1' | A2 | A2' | A3' | A4' | A5' | A3 | A6' | A4 | A7' |
| Production method | Continuous hy-drogenation | ○ | | ○ | ○ | | ○ | ○ | ○ | | ○ | |
| | Number (N) of complete mixing tanks* only in continuous case | 1.1 | | 1.1 | 1.1 | | 1.1 | 1.1 | 1.1 | | 1.1 | |
| | Batch hydrogenation | | ○ | | | ○ | | | | ○ | | ○ |
| | Distribution of hydrogenation rate (HWD) * only batch blending case | | | | | | | | | | | |
| Physical properties of polymer | ML after hydrogenation | 84 | 75 | 97 | 113 | 112 | <10 | unmeasurable | 80 | 72 | 80 | 72 |
| | Cold-flow resis-tance | △ | △ | ○ | ◎ | ○ | × | ◎ | △ | △ | △ | △ |
| Physical properties of vulca-nized pro-duct | Ozone resis-tance | ◎ | △ | ○ | △ | ○ | ○ | △ | ◎ | △ | ◎ | △ |
| | Processability (ML of com-pounded pro-duct) | △ | △ | △ | × | × | ◎ | × | △ | △ | △ | △ |
| | TB | ○ | △ | ◎ | ◎ | ○ | × | △ | ○ | △ | ○ | △ |
| | EB | △ | △ | △ | × | × | × | × | △ | △ | △ | △ |
| | Fuel-saving economy | △ | △ | △ | × | × | × | × | △ | △ | △ | △ |

*1: modified type: 1,3-dimethyl-2-imidazolidinone (Example 4, Comparative Example 7)

[Table 4]

| | Item | Example 5 | Comparative Example 8 | Example 6 | Comparative Example 9 | Example 7 | Comparative Example 10 | Example 8 | Comparative Example 11 | Example 9 | Comparative Example 12 |
|---|---|---|---|---|---|---|---|---|---|---|---|
| | Hydrogenated conjugated diene-based polymer No. | B1 | B1' | B2 | B2' | B3 | B3' | B4 | B4' | B5 | B4' |
| Polymer structure | Amount (wt%) of styrene bound | 4 | 4 | 8 | 8 | 26 | 25 | 40 | 40 | 0 | 0 |
| | Amount (mol%) in butadiene of 1,2-vinyl bond | 26 | 26 | 40 | 40 | 56 | 55 | 38 | 41 | 26 | 26 |
| | Total percentage (mol%) of hydrogenation | 76 | 75 | 77 | 80 | 78 | 79 | 79 | 75 | 77 | 76 |
| | Amount (wt%) of styrene block | <1 | <1 | <1 | <1 | <1 | <1 | <1 | <1 | <1 | <1 |
| | Amount (wt%) of ethylene structure | 49 | 49 | 34 | 37 | 17 | 18 | 25 | 21 | 51 | 50 |
| | Percentage (%) of modification | 75 | 75 | 75 | 75 | 75 | 75 | 75 | 75 | 75 | 75 |
| | Mw ($\times 10^4$) after hydrogenation | 38 | 37 | 38 | 36 | 41 | 42 | 40 | 40 | 35 | 36 |
| | Mw/Mn after ozone decomposition | 2.64 | 1.45 | 2.70 | 1.86 | 4.36 | 1.87 | 3.75 | 1.81 | 2.74 | 1.47 |

|  | Item | Example 5 | Comparative Example 8 | Example 6 | Comparative Example 9 | Example 7 | Comparative Example 10 | Example 8 | Comparative Example 11 | Example 9 | Comparative Example 12 |
|---|---|---|---|---|---|---|---|---|---|---|---|
|  | Hydrogenated conjugated diene-based polymer No. | B1 | B1' | B2 | B2' | B3 | B3' | B4 | B4' | B5 | B4' |
|  | Area ratio S up to molecular weight at peak top assigned to ozone decomposition product | ○ | × | ○ | × | ○ | × | ○ | × | ○ | × |
| Production method | Continuous hydrogenation | ○ |  | ○ |  | ○ |  | ○ |  | ○ |  |
|  | Number (N) of complete mixing tanks* only in continuous case | 1.1 |  | 1.1 |  | 1.1 |  | 1.1 |  | 1.1 |  |
|  | Batch hydrogenation |  | ○ |  | ○ |  | ○ |  | ○ |  | ○ |
|  | Distribution of hydrogenation rate (HWD) * only batch blending case |  |  |  |  |  |  |  |  |  |  |
| Physical properties of polymer | ML after hydrogenation | 89 | 80 | 84 | 73 | 72 | 68 | 84 | 77 | 88 | 79 |
|  | Cold-flow resistance | △ | △ | △ | △ | △ | △ | △ | △ | △ | △ |

| | Item | Example 5 | Comparative Example 8 | Example 6 | Comparative Example 9 | Example 7 | Comparative Example 10 | Example 8 | Comparative Example 11 | Example 9 | Comparative Example 12 |
|---|---|---|---|---|---|---|---|---|---|---|---|
| | Hydrogenated conjugated diene-based polymer No. | B1 | B1' | B2 | B2' | B3 | B3' | B4 | B4' | B5 | B4' |
| Physical properties of vulcanized product | Ozone resistance | ◎ | △ | ◎ | △ | ◎ | △ | ◎ | △ | ◎ | △ |
| | Processability (ML of compounded product) | △ | △ | △ | △ | △ | △ | △ | △ | △ | △ |
| | TB | ○ | △ | ○ | △ | ○ | △ | ○ | △ | △ | △ |
| | EB | △ | △ | △ | △ | △ | △ | △ | △ | △ | △ |
| | Fuel-saving economy | △ | △ | △ | △ | △ | △ | △ | △ | △ | △ |

EP 4 617 291 A1

[Table 5]

| | | Item | Example 10 | Example 11 | Example 12 | Example 13 | Example 14 | Example 15 | Comparative Example 13 | Comparative Example 14 | Comparative Example 15 | Comparative Example 16 |
|---|---|---|---|---|---|---|---|---|---|---|---|---|
| Polymer structure | | Hydrogenated conjugated diene-based polymer No. | C1 | C2 | C3 | C4 | C5 | C6 | C1' | C2' | C3' | C4' |
| | | Amount (wt%) of styrene bound | 8 | 8 | 8 | 8 | 8 | 8 | 8 | 8 | 8 | 8 |
| | | Amount (mol%) in butadiene of 1,2-vinyl bond | 40 | 40 | 40 | 40 | 40 | 40 | 40 | 40 | 40 | 40 |
| | | Total percentage (mol%) of hydrogenation | 77 | 85 | 95 | 60 | 50 | 30 | 77 | 0 | 50 | 30 |
| | | Amount (wt%) of styrene block | <1 | <1 | <1 | <1 | <1 | <1 | <1 | <1 | <1 | <1 |
| | | Amount (wt%) of ethylene structure | 34 | 42 | 51 | 19 | 9 | 3 | 34 | 0 | 9 | 0 |
| | | Percentage (%) of modification | 75 | 75 | 75 | 75 | 75 | 75 | 75 | 75 | 75 | 75 |
| | | Mw ($\times 10^4$) after hydrogenation | 38 | 40 | 39 | 41 | 40 | 40 | 36 | 37 | 36 | 36 |
| | | Mw/Mn after ozone decomposition | 2.70 | 3.50 | 3.70 | 2.65 | 2.60 | 2.45 | 1.86 | 1.15 | 1.86 | 1.50 |

| | Item | Example 10 | Example 11 | Example 12 | Example 13 | Example 14 | Example 15 | Comparative Example 13 | Comparative Example 14 | Comparative Example 15 | Comparative Example 16 |
|---|---|---|---|---|---|---|---|---|---|---|---|
| | Hydrogenated conjugated diene-based polymer No. | C1 | C2 | C3 | C4 | C5 | C6 | C1' | C2' | C3' | C4' |
| | Area ratio S up to molecular weight at peak top assigned to ozone decomposition product | ○ | ○ | ○ | ○ | ○ | ○ | × | - | × | × |
| Production method | Continuous hydrogenation | ○ | ○ | ○ | ○ | ○ | ○ | | | | |
| | Number (N) of complete mixing tanks* only in continuous case | 1.1 | 1.1 | 1.1 | 1.1 | 1.1 | 1.1 | | | | |
| | Batch hydrogenation | | | | | | | ○ | | ○ | ○ |
| | Distribution of hydrogenation rate (HWD) * only batch blending case | | | | | | | | | | |
| Physical properties of polymer | ML after hydrogenation | 84 | 95 | 107 | 65 | 56 | 42 | 73 | 48 | 53 | 41 |
| | Cold-flow resistance | △ | ○ | ○ | △ | △ | △ | △ | △ | △ | △ |

EP 4 617 291 A1

37

| | Item | Example 10 | Example 11 | Example 12 | Example 13 | Example 14 | Example 15 | Comparative Example 13 | Comparative Example 14 | Comparative Example 15 | Comparative Example 16 |
|---|---|---|---|---|---|---|---|---|---|---|---|
| | Hydrogenated conjugated diene-based polymer No. | C1 | C2 | C3 | C4 | C5 | C6 | C1' | C2' | C3' | C4' |
| Physical properties of vulcanized product | Ozone resistance | ◎ | ◎ | ◎ | ◎ | ◎ | ○ | △ | × | × | × |
| | Processability (ML of compounded product) | △ | △ | △ | △ | ○ | ○ | △ | ○ | △ | △ |
| | TB | ○ | ○ | ○ | ○ | △ | △ | △ | × | △ | △ |
| | EB | △ | △ | × | △ | △ | △ | △ | △ | △ | △ |
| | Fuel-saving economy | △ | △ | △ | △ | △ | ○ | △ | △ | △ | △ |

[Table 6]

| | Item | Example 16 | Example 17 | Example 18 | Example 19 | Example 20 | Example 21 | Example 22 | Comparative Example 17 |
|---|---|---|---|---|---|---|---|---|---|
| | Hydrogenated conjugated diene-based polymer No. | D1 | D2 | D3 | D4 | D5 | D6 | D7 | D1' |
| Polymer structure | Amount (wt%) of styrene bound | 8 | 8 | 8 | 8 | 8 | 8 | 8 | 8 |
| | Amount (mol% in butadiene) of 1,2-vinyl bond | 40 | 40 | 40 | 40 | 40 | 40 | 40 | 40 |
| | Total percentage (mol%) of hydrogenation | 77 | 75 | 75 | 75 | 75 | 75 | 75 | 75 |
| | Amount (wt%) of styrene block | <1 | <1 | <1 | <1 | <1 | <1 | <1 | <1 |
| | Amount (wt%) of ethylene structure | 34 | 33 | 33 | 33 | 33 | 33 | 33 | 34 |
| | Percentage (%) of modification | 75 | 75 | 75 | 75 | 75 | 75 | 75 | 75 |
| | Mw ($\times 10^4$) after hydrogenation | 38 | 39 | 40 | 40 | 38 | 38 | 40 | 36 |
| | Mw/Mn after ozone decomposition | 2.70 | 2.30 | 2.43 | 2.20 | 2.60 | 2.65 | 2.40 | 1.86 |
| | Area ratio S up to molecular weight at peak top assigned to ozone decomposition product | ○ | ○ | ○ | ○ | ○ | ○ | ○ | × |
| Production method | Continuous hydrogenation | ○ | | | ○*2 | ○*3 | ○*4 | ○*5 | |
| | Number (N) of complete mixing tanks* only in continuous case | 1.1 | | | 2.3 | 1.3 | 1.2 | 2.2 | |
| | Batch hydrogenation | | ○*6 | ○*7 | | | | | ○ |
| | Distribution of hydrogenation rate (HWD) * only batch blending case | | 1.01 | 1.04 | | | | | 1.00 |
| Physical properties of polymer | ML after hydrogenation | 84 | 76 | 80 | 76 | 82 | 84 | 80 | 73 |
| | Cold-flow resistance | △ | △ | △ | △ | △ | △ | △ | △ |

(continued)

| | Item | Example 16 | Example 17 | Example 18 | Example 19 | Example 20 | Example 21 | Example 22 | Comparative Example 17 |
|---|---|---|---|---|---|---|---|---|---|
| | Hydrogenated conjugated diene-based polymer No. | D1 | D2 | D3 | D4 | D5 | D6 | D7 | D1' |
| Physical properties of vulca- nized pro- duct | Ozone resistance | ◎ | ○ | ○ | ○ | ◎ | ◎ | ○ | △ |
| | Processability (ML of compounded product) | △ | △ | △ | △ | △ | △ | △ | △ |
| | TB | ○ | △ | △ | △ | ○ | ○ | ○ | △ |
| | EB | △ | △ | △ | △ | △ | △ | △ | △ |
| | Fuel-saving economy | △ | △ | △ | △ | △ | △ | △ | △ |

*2: polymer supplied through bottom portion of reactor in hydrogenation step (Example 19), *3: rotational speed in hydrogenation step: 70 rpm (Example 20), *4: polymer supplied at ratio of 8:2 through top portion and central side portion of reactor in hydrogenation step (Example 21)
*5: rotational speed: 20 rpm, amount of polymer supplied: 2.3 kg/h, level liquid surface of in reactor: 80% in hydrogenation step (Example 22), *6: blend of three polymers different in hydrogenation rate, *7: blend of five polymers different in hydrogenation rate

It was confirmed from Table 3 to Table 6 that the polymers of Examples 1 to 22 were each excellent in processability and cold-flow resistance, and allowed the resulting rubber composition to be excellent in ozone resistance and breaking properties, as compared with "Hydrogenated conjugated diene-based polymer as reference" described in Table 1.

As described above, it has been revealed that the present invention can provide a hydrogenated conjugated diene-based polymer which not only allows the hydrogenated conjugated diene-based polymer and the rubber composition obtained with the polymer to maintain processability and cold-flow resistance, but also allows the resulting rubber composition to be excellent in ozone resistance, breaking properties, and low hysteresis loss properties.

The present application is based on the Japanese Patent Application (Japanese Patent Application No. 2022-178955) filed with JPO on November 8, 2022, the content of which is herein incorporated as reference.

Industrial Applicability

The present invention can be industrially utilized as, for example, a material for casings of treads, side walls, and the like of tires, packings and gaskets, sealing materials, anti-vibration rubber, vibration-proof rubber, damping materials, conveyor belts, outsoles for shoes and midsoles for shoes, weather strips for automobiles, glass runs, trunk lids, railway members, airplane members, waterproof sheets, engine mounts, air springs, rubber gloves, medical and sanitary products, hoses for industry and various applications, battery cases, adhesives, wire coverings, window frame rubber, rubber rollers for OA equipment or spinning, keypads, keyboard covers, hydroscopes, swimming caps, container bags, marine components, indoor floor materials, artificial muscle materials, and various industry products.

**Claims**

1. A hydrogenated conjugated diene-based polymer satisfying the following conditions (i) to (iii):

    <Condition (i)>

    a random polymer comprising a conjugated diene monomer unit and optionally comprising an aromatic vinyl monomer unit, wherein
    a content of an aromatic vinyl monomer block is less than 10 mass% of the hydrogenated conjugated diene-based polymer;

    <Condition (ii)>
    a weight average molecular weight is $10 \times 10^4$ or more and $200 \times 10^4$ or less; and
    <Condition (iii)>
    a molecular weight distribution of an ozonolysis product is 2.1 or more and 6.0 or less.

2. The hydrogenated conjugated diene-based polymer according to claim 1, wherein a hydrogenation rate is 97 mol% or less.

3. The hydrogenated conjugated diene-based polymer according to claim 1, wherein a hydrogenation rate is 50 mol% or more.

4. The hydrogenated conjugated diene-based polymer according to claim 1, wherein the polymer has 1 mass% or more of an ethylene structure.

5. The hydrogenated conjugated diene-based polymer according to claim 1, wherein the polymer comprises an aromatic vinyl monomer unit.

6. A method for producing the hydrogenated conjugated diene-based polymer according to any one of claims 1 to 5, comprising:

    a polymerization step of obtaining a conjugated diene-based polymer having a weight average molecular weight of $10 \times 10^4$ or more and $200 \times 10^4$ or less and comprising an aromatic vinyl monomer block at a content of less than 10 mass%,
    a hydrogenation step of obtaining a plurality of hydrogenated conjugated diene-based polymers different in hydrogenation rate, and

a mixing step of mixing the plurality of hydrogenated conjugated diene-based polymers to achieve a distribution of the hydrogenation rate HWD represented by the following expression (1) of 1.005 or more:

$$HWD = \sum_{i=1}^{n} H_i^2 w_i \bigg/ \sum_{i=1}^{n} H_i w_i \qquad \cdot \cdot \cdot \quad (1)$$

wherein n represents a total number of components in the hydrogenated conjugated diene-based polymers having different percentages of hydrogenation, and $w_i$ represents a mass fraction of a hydrogenated conjugated diene-based polymer having a specified percentage $H_i$ of hydrogenation in all the hydrogenated conjugated diene-based polymers.

7. A method for producing the hydrogenated conjugated diene-based polymer according to any one of claims 1 to 5, comprising:

a polymerization step of obtaining a conjugated diene-based polymer having a weight average molecular weight of $10 \times 10^4$ or more and $200 \times 10^4$ or less and comprising an aromatic vinyl monomer block at a content of less than 10 mass%, and
a hydrogenation step of hydrogenating the conjugated diene-based polymer, wherein
the hydrogenation step is a continuous process, and the number N of complete mixing tanks in series in fitting of a residence time distribution in a reactor in a complete-mixing-tanks-in-series model by an impulse response method, is from 1.0 to 2.5.

8. The method for producing the hydrogenated conjugated diene-based polymer according to claim 7, comprising supplying hydrogen and the conjugated diene-based polymer in opposite directions to each other, to the reactor in the hydrogenation step, or supplying each of hydrogen and/or the conjugated diene-based polymer through a plurality of locations.

9. The method for producing the hydrogenated conjugated diene-based polymer according to claim 7, comprising

using a stirring tank type reactor in the continuous process, and supplying the conjugated diene-based polymer and a hydrogenation catalyst through a tank upper portion of the stirring tank type reactor and supplying hydrogen through a tank bottom portion of the stirring tank type reactor with stirring, and
extruding the hydrogenated conjugated diene-based polymer through the tank bottom portion of the stirring tank type reactor.

## INTERNATIONAL SEARCH REPORT

International application No.

**PCT/JP2023/040226**

### A. CLASSIFICATION OF SUBJECT MATTER

**C08C 19/02**(2006.01)i
FI: C08C19/02

According to International Patent Classification (IPC) or to both national classification and IPC

### B. FIELDS SEARCHED

Minimum documentation searched (classification system followed by classification symbols)

C08C19/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 09-291121 A (ASAHI CHEM IND CO LTD) 11 November 1997 (1997-11-11) claims, examples | 1-9 |
| A | JP 2010-280853 A (BRIDGESTONE CORP) 16 December 2010 (2010-12-16) claims, examples | 1-9 |
| A | WO 2017/010562 A1 (ASAHI KASEI KABUSHIKI KAISHA) 19 January 2017 (2017-01-19) claims, examples | 1-9 |
| A | JP 2017-025144 A (ASAHI KASEI KABUSHIKI KAISHA) 02 February 2017 (2017-02-02) claims, examples | 1-9 |
| A | JP 2021-176957 A (EVONIK OPERATIONS GMBH) 11 November 2021 (2021-11-11) claims, examples | 1-9 |
| A | WO 2022/085458 A1 (ZEON CORPORATION) 28 April 2022 (2022-04-28) claims, examples | 1-9 |
| A | JP 2009-106929 A (LANXESS DEUTSCHLAND GMBH) 21 May 2009 (2009-05-21) claims, examples | 1-9 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **05 January 2024** | **23 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/040226**

| Patent document cited in search report | | | Publication date (day/month/year) | Patent family member(s) | | | Publication date (day/month/year) |
|---|---|---|---|---|---|---|---|
| JP | 09-291121 | A | 11 November 1997 | (Family: none) | | | |
| JP | 2010-280853 | A | 16 December 2010 | (Family: none) | | | |
| WO | 2017/010562 | A1 | 19 January 2017 | US claims, examples EP CN KR | 2018/0201716 3323838 107735413 10-2018-0016502 | A1 A1 A A | |
| JP | 2017-025144 | A | 02 February 2017 | (Family: none) | | | |
| JP | 2021-176957 | A | 11 November 2021 | US claims, examples EP KR CN | 2021/0347927 3907269 10-2021-0135933 113603829 | A1 A1 A A | |
| WO | 2022/085458 | A1 | 28 April 2022 | CN KR | 116323777 10-2023-0093252 | A A | |
| JP | 2009-106929 | A | 21 May 2009 | US claims, examples EP | 2009/0069516 2027919 | A1 A2 | |

Form PCT/ISA/210 (patent family annex) (January 2015)

**EP 4 617 291 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017014282 A
- JP 6845679 B
- WO 2014133097 A
- JP 2020045500 A
- JP 2022178955 A

**Non-patent literature cited in the description**

- **TANAKA et al.** *Polymer*, 1981, vol. 22, 1721